(19) Europäisches Patentamt
European Patent Office
Office européen des brevets

(11) EP 3 546 950 A1

(12) EUROPEAN PATENT APPLICATION

(43) Date of publication:
**02.10.2019 Bulletin 2019/40**

(51) Int Cl.:
***G01N 35/00** (2006.01)*

(21) Application number: **19164291.7**

(22) Date of filing: **21.03.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.03.2018 JP 2018066071**

(71) Applicant: **SYSMEX CORPORATION**
**Kobe-shi**
**Hyogo 651-0073 (JP)**

(72) Inventors:
- **Ashida, Mamoru**
  **Hyogo, 651-0073 (JP)**
- **Daito, Motonari**
  **Hyogo, 651-0073 (JP)**
- **Kino, Fumiko**
  **Hyogo, 651-0073 (JP)**
- **Yoshimoto, Michiko**
  **Hyogo, 651-0073 (JP)**
- **Seki, Akane**
  **Hyogo, 651-0073 (JP)**
- **Nakashima, Kazuhiro**
  **Hyogo, 651-0073 (JP)**
- **Hirano, Hideki**
  **Hyogo, 651-0073 (JP)**

(74) Representative: **Hoffmann Eitle**
**Patent- und Rechtsanwälte PartmbB**
**Arabellastraße 30**
**81925 München (DE)**

# (54) APPARATUS FOR GENERATING MONITORING DATA OF SAMPLE ANALYZER, SAMPLE ANALYZING APPARATUS AND METHOD OF GENERATING MONITORING DATA OF SAMPLE ANALYZER

(57) An apparatus for generating monitoring data for managing the state of a sample analyzer is provided. The apparatus includes a processing unit for generating output data for associating and displaying, in a time series, a sample information region indicating information related to measurement data acquired by a sample analyzer from a sample, and an operational information region indicating information related to the operation of the sample analyzer.

EP 3 546 950 A1

## Description

FIELD OF THE INVENTION

The present disclosure relates to an apparatus for generating monitoring data of a sample analyzer, a sample analyzer, and a method of generating monitoring data of the sample analyzer.

BACKGROUND

Japanese Patent No. 4290490 discloses a quality control method in a management apparatus connected to a plurality of analyzers for clinical examination via a network, including a step in which a receiving means receives sample data obtained by measuring a predetermined quality control substance by an analyzer via the network, a step in which a processing means accumulates the received sample data in a storage means and aggregates the accumulated sample data for each analyzer and for each quality control substance, and a step of providing the aggregation result of the sample data received within a predetermined period as an external quality control result to the analyzer by a providing means.

SUMMARY OF THE INVENTION

Quality control of an analytical apparatus for clinical examination is performed by measuring standard samples for quality control and monitoring whether the results fall within a range of predetermined accuracy. In the unlikely event that quality control failure occurs, it is necessary to identify the cause. Various cases are assumed as reasons for poor quality control, such as cases arising from the quality of the reagent, the operation of the analyzer and the like. However, with the quality control method described in Japanese Patent No. 4290490, it is difficult to pursue the cause of poor quality control.

The present specification disclose making it easier to pursue the cause of poor quality control than before.

One embodiment of the present disclosure relates to an apparatus for generating monitoring data for managing the state of a sample analyzer (2000). The monitoring data generating apparatus includes a processing unit (710a) for generating output data for associating and displaying, in a time series, a sample information region indicating information related to measurement data acquired by a sample analyzer from a sample, and an operational information region indicating information related to the operation of the sample analyzer. Preferably, the sample can be a standard sample and/or a sample collected from a subject. In this way it is possible for the operator to generate data for grasping the state of the sample analyzer at a glance. Preferably, the output data are data for associating and displaying the sample information region and the operational information region indicating information related to the operation of the sample analyzer at the time of acquiring the measurement data in a time series. In this way it is possible to easily confirm the information of the sample information and the operational information at the same point in time.

Preferably, the information related to the measurement data of the sample are at least one selected from a group including positive control measurement data, data for positive control turbidity rise time, negative control measurement data, measurement data of a calibrator for preparing a calibration curve, the slope of a calibration curve created based on measurement data of a calibrator, and external quality control information related to these data. The operational information related to the sample analyzer (2000) includes at least one selected from a group including electrostatic capacity, quantitative count, suction and discharge pressure of reagent, environmental temperature, remaining amount of reagent, software version information, error code, error content, date and time of error occurrence, operation monitor, and status. Preferably, the operational information region displays side by side a plurality of types of information selected from a group including an electrostatic capacity, a quantitative count, a suction and discharge pressure of a reagent, an environmental temperature, a remaining amount of a reagent, a software version information, an error code, an error content, an error occurrence date and time, an operation monitor, and a status. In this way it is possible for the operator to generate data for readily rasping the details of the state of the sample analyzer (2000).

Preferably, the processing unit (710a) also acquires measurement data of the sample from a plurality of sample analyzers, generates an index for evaluating the state of the sample analyzer to be managed from the plurality of acquired measurement data, and generates output data for displaying the measurement data acquired from the sample analyzer to be managed in a sample information region so as to be comparable with the index. In this way it is possible to generate data for monitoring the accuracy of the sample analyzer (2000) based on the measurement data of the sample.

Preferably, the output data are data for displaying output data in the sample information region and the operational information region in one continuous area. The output data are data for displaying the sample information region and the operational information region side by side in one in a continuous region. The output data are data for displaying the sample information region and the operational information region in alignment based on a point in time when the measurement data are acquired. The output data are data for displaying the sample information region above the operational information region. The output data are data for displaying the sample information region and the operational information region partially overlapped in one screen. The output data are data for displaying the sample information region and the operational information region partially overlapped in one area. The output data are data for displaying the sample information region and the operational information region in respectively different windows, and when one window is specified, another window is also displayed. The output data are data for displaying the sample information region and the operational information region in different windows, and emphasizing another window when designating any one window. It is possible to generate data that enhances the convenience of the operator by providing various display modes in this manner.

More preferably, the monitoring data generating apparatus also includes a display unit, and the processing unit displays the output data on the display unit. In this way the operator can easily grasp the accuracy of the sample analyzer (2000).

More preferably, the output data are user interface data for showing the sample information and the operational information in a time-series graph. In this way the operator can easily grasp changes in the accuracy of the sample analyzer (2000).

A second embodiment of the present disclosure relates to a monitoring data generation system (7000). The monitoring data generation system includes the generating apparatus (3000) and a sample analyzer (2000) connected to the generating apparatus.

The embodiment of the present disclosure relate to a method of constructing a monitoring data generation system (7000). The method of constructing the monitoring data generation system includes a step of preparing the generating apparatus (3000), and a step of preparing a sample analyzer (2000) connected to the generating apparatus.

One embodiment of the present disclosure relates to a method of generating monitoring data for managing a state of a sample analyzer (2000). In this method, output data for associating and displaying in a time series a sample information region indicating information related to measurement data acquired by a sample analyzer (2000) from a sample , and an operational information region indicating information related to the operation of the sample analyzer for monitoring the state thereof are generated.

One embodiment of the present disclosure relates to a user interface display screen for displaying monitoring data for managing the state of a sample analyzer (2000). The monitoring data associate and display in time series a sample information region indicating information related to measurement data acquired by the sample analyzer from a sample, and an operational information region indicating information related to the operation of the sample analyzer for monitoring the state thereof.

According to the monitoring data generation system, the monitoring data generation method, and the user interface display screen according to the present disclosure, it is possible for the operator to generate data for grasping the state of the sample analyzer at a glance.

An embodiment of the present disclosure relates to a monitoring method for managing the state of a sample analyzer. The monitoring method includes a step of generating output data for associating and displaying a time series related to a sample information region indicating information related to measurement data acquired by a sample analyzer from a sample, and an operational information region indicating information related to the operation of the sample analyzer, and a step of monitoring the output data. In this way it is possible to positively monitor the state of the sample analyzer (2000).

It is possible to more easily pursue the cause of a quality control failure than conventionally.

BRIEF DESCRIPTION OF THE DRAWINGS

FIG. 1 is a diagram showing a difference between the prior art and the present disclosure;
FIG. 2 is an example of a screen for logging in to a screen for displaying output data;
FIG. 3 is a diagram showing a list of facilities;
FIG. 4 shows an example when output data are shown in one area;
FIG. 5 is a display example of information shown in one area;
FIG. 6 is a display example of information shown in one area;
FIG. 7 is a display example of information shown in one area;
FIG. 8 is a display example of information shown in one area;
FIG. 9 is a display example of information shown in one area;
FIG. 10 is a display example of information shown in one area;
FIG. 11 is a display example of information shown in one area;
FIG. 12 is a display example of information shown in one area;
FIG. 13 is a display example of information shown in one area;

FIG. 14 is a display example of information shown in one area;
FIG. 15 is a display example of information shown in one area;
FIG. 16 is a display example of information shown in one area;
FIG. 17 is a block diagram showing an example of a structure of a monitoring data generation system;
FIG. 18 is a schematic diagram showing an example of a structure of a monitoring data generation system;
FIG. 19 is a schematic diagram showing an example of a preprocessing unit;
FIG. 20 is a plan view showing an example of a structure of a measuring unit;
FIG. 21 is a block diagram showing an example of a hardware structure of a data processing unit;
FIG. 22 is a graph showing an example of turbidity rise time;
FIG. 23 is an example of a calibration curve;
FIG. 24 is a diagram showing an example of a calibrator-control database 4100;
FIG. 25 is a diagram showing an example of a determination result database 4010DB;
FIG. 26 is a diagram showing an example of a sample processing apparatus operation database 4040;
FIG. 27 is a diagram showing an example of a quality control information database 4050DB created for each facility.
FIG. 28 is a block diagram showing an example of a hardware structure of an apparatus for generating quality control data;
FIG. 29 is a flowchart showing the operation of a sample analyzer and a server;
FIG. 30 is a flowchart showing steps of a determination process in the sample analyzer; FIG. 31 is a flowchart showing steps of a ratio calculation process in an apparatus for generating quality control data; and
FIG. 32 is a diagram showing an example of a weekly report.

DESCRIPTION OF THE EMBODIMENTS OF THE INVENTION

1. Method of Generating Monitoring Data of Sample Analyzer

The first embodiment of the present disclosure relates to a method of generating monitoring data for monitoring a state (for example, analysis accuracy) of a sample analyzer 2000 installed in a clinical laboratory, a clinical test center or the like.

FIG. 1 is a diagram showing a difference between the prior art and the present disclosure. In clinical tests, a standard sample having a known value indicated by measurement data for each test item is measured before or simultaneously with the measurement of a sample in order to monitor the accuracy of the sample analyzer 2000 generally as in the accuracy management method described in Japanese Patent No. 4290490. Measurement data of standard samples are used not only for internal quality control to monitor whether constant inspection data can be acquired within individual facilities, but also for external quality control for monitoring whether there is no difference between facilities in inspection data. However, conventionally, only the information on quality control of the standard sample is displayed on the screen or paper medium, and the information on the standard sample and the information on the operation of the sample analyzer 2000 itself are not displayed in association with one another.

In the present disclosure, output data for associating and displaying the sample information region and information related to the operation of the sample analyzer 2000 itself are generated.

Preferably, in the first embodiment, output data are generated to associate and display in time series a sample information region (hereinafter also referred to as "information region of the sample") indicating information related to measurement data acquired by the sample analyzer from a sample, and an operational information region (hereinafter also referred to as "information region for operation") indicating information related to the operation of the sample analyzer at the time of acquiring the measurement data and for monitoring the state thereof. The output data are user interface data for displaying on the output units 232 and 720 such as a screen by using browser software or the like.

The sample includes a standard sample, a sample collected from a subject, and the like.

When the sample is a standard sample (positive control, negative control, calibrator, and the like) for monitoring the state for test items, the sample information includes, for example, at least one selected from a group of calibration data 4020 (including the measurement data of the calibrator and the rise time of its turbidity, the calibration curve data such as the gradient of the calibration curve prepared from the measurement data and the like), control data 4030 (including quantitative data and rise time of turbidity) including positive control data and/or negative control data, and external quality control information on these data.

Operation data 4040 (sometimes simply referred to as "operation data 4040") of a sample processing apparatus 2000 includes at least one selected from a group consisting of, for example, electrostatic capacity, quantitative count, suction and discharge pressure of reagent, environmental temperature, remaining amount of reagent, software version information, error code, error content, error occurrence date and time, operational monitor, and status in the information related to the operation of the sample analyze.

As an example of displaying the sample information region and the operational information region in association with each other, the sample information region and the operational information region are displayed in one continuous area. Preferably, the sample information region and the operational information region are displayed side by side in a vertical direction within one continuous area. More preferably, the sample information region is displayed above the operational information region.

As another example of displaying the sample information region and the operational information region in association with each other, the sample information region and the operational information region are displayed partially overlapped in one screen. Preferably, the sample information region and the operational information region are partially overlapped and displayed in one area.

As another example of displaying the sample information region and the operational information region in association with each other, the sample information region and the operational information region are displayed in different windows, and when one window is specified, another window is also displayed. Preferably, the sample information region and the operational information region are displayed in different windows, and when one windows is specified, the other window is emphasized. To be emphasized means color tone inversion of the window, enlarged display of the window, and the like.

In the sample information region, a ratio (for example, a positive rate) indicating the degree to which the lesion is positive in the plurality of samples to be described later is calculated by statistical processing from a plurality of determination results collected before measurement of the sample (hereinafter also referred to as "percentage area") together with the index.

An example of a method of displaying output data will be described with reference to FIGS. 2 to 15. In this example, the sample information region and the operational information region are displayed in association in one area as necessary.

First, an operator (administrator) or the like of the management facility activates a monitoring data generating apparatus 3000 (hereinafter, also referred to as "generating apparatus 3000") installed in a management facility such as a service center or the like, and the login screen A to the monitoring system shown in FIG. 2 is displayed on the output unit 720. On the login screen A, for example, an area A1 for displaying a system name, an area A2 for inputting a user name, an area A3 for inputting a password, and a login area A4 are included. When the operator inputs the user name and password from the input unit 730 and selects the login area, the screen is switched to the screen B displaying a list of one or more sample analyzers 2000 shown in FIG. 3.

For example, a search keyword input area B1 in which a facility name, serial number and the like can be input in order to search for a specific sample analyzer 2000 or facility, a pull-down area B2 where a facility name or a model name can be selected, a list B3 of the sample analyzers 2000, a weekly report area B5 (details are shown in FIG. 32) for displaying the internal quality control on a weekly basis, a positive rate report area B6 for displaying a report screen showing the positive rate of the presence or absence of a disease reflected by the test item, and a log-off area B4 selected at the time of canceling the login state are included on screen B. On the screen B displaying the list of the sample analyzers 2000, a warning B7 for informing the operator of the facility where the quality control failure is detected also may be displayed.

In addition to the facility name (including branch name), the serial number of the model of the sample analyzer 2000, for example, the state of the sample analyzer 2000 at each facility at the time the operator logged in (status), date/time when the status is reached, model name and/or nickname of the sample analyzer 2000, version information of analysis software installed in the data processing unit 230 of the sample analyzer 2000 and the like are included in the list B3 of the sample analyzers 2000.

The list B3 of the sample analyzers 2000 also includes an area B8 for indicating detailed monitoring information of each sample analyzer 2000. By selecting this area B8, it is possible to view the monitoring data of the present disclosure.

When the area B8 is selected, a screen output of the output data C (user interface data) /is displayed to display an area (sample information region) where the information on the sample can be viewed and an area (operational information region) where the information on the operation at the time of acquiring the measurement data can be viewed. On the screen displayed by the output data C, for example, in one area E, a pull-down key C1 for selecting a reagent lot with a pull-down list, a display area C2 for numerically indicating information on internal accuracy management of each sample analyzer 2000, and a plurality of display areas C3 (areas 1 to 11) in which time series data of either the sample information region and the operational information region are indicated by a graph or the like. A warning C4 also may be displayed in the information in which the quality control failure is detected. C5 indicates a scroll key for scrolling the area E and changing the display position.

Next, an example of each display area C3 will be described by example of when the expression level of CK-19 is used as an examination item.

FIG. 5 shows an example of the time series graph area D of the detection time of the turbidity of a positive control. In the time series graph region D, a graph area D3, a selection region D4 for changing the display area of the graph, a legend area D2 for explaining lines or marks displayed on the graph, and a selection area D1 for indicating information of the format for user monitoring are included. The points in the graph indicate values reflecting the information of each sample at the time of acquisition by the analyzer 3000 (the same applies to this disclosure in the following description). A warning D5 also may be displayed in the information in which the quality control failure is detected.

FIG. 6 shows an example of the display region F of the time series graph of the quantitative value of the positive control. The display area F also may include a selection area F1 for changing the display area of the graph. In addition, FIG. 6 shows an example of the display region G of the time series graph of the slope of the calibration curve when the expression level of CK-19 is used as an examination item. The display area G also may include a selection area G1 for changing the display area of the graph.

FIG. 7 shows and example of a display area H showing a list of statuses of each sample analyzer 2000, and a display area I showing a list of error histories of each sample analyzer 2000. In each page, a list selection area H1 for changing the display area of each list also may be displayed. In the display area H, the contents of the status indicating the operational state of each sample analyzer 2000, the status ID for identifying and displaying different status states, the date and time when the server 4000 received the status and the like are displayed. A selection area a (used in the following description of this disclosure) for selecting a process for outputting the list as a CSV file, for example, may be displayed. In the display area I are shown the details of the measurement failure (error) detected by each sample analyzer 2000, the error code for identifying and displaying each error, the date and time when the error was detected.

FIG. 8 illustrates a display area J showing the contents of the error. A list selection area J1 for changing the display area of each list also may be displayed. In the display area J, a test item in which an error is detected, a message indicating that an error is detected by a standard sample or a sample, a message indicating an estimated cause of the error, or the like may be displayed. Figure 16 shows the relationship between the error pattern and the estimated cause.

FIG. 9 shows an example of a display region K of a time series graph of measured values of each calibrator when a calibration curve is created. The display area K also may include a selection area K1 for changing the display area of the graph. A legend area K2 indicating the origin of each graph also may be displayed. In addition, FIG. 9 shows an example of a display region L of a graph in which measured values of the positive control in each block 65 are displayed in time series when the expression level of CK-19 is used as a test item. The display area L also may include a selection area L1 for changing the display area of the graph. A legend area L2 indicating the origin of each graph may be displayed. A block display area L3 for switching the display for each block also may be included.

FIG. 10 shows an example of a comparative display area M for the operator to check the rise time of the turbidity of the positive control of each sample analyzer 2000. The region M may include a pull-down area M1 for switching the rise time of the turbidity of the positive control of each sample analyzer 2000 displayed in the region M, and a selection area M2 for changing the display area of the graph. FIG. 10 illustrates an external quality control list N for comparing the accuracy of each sample analyzer 2000 among the sample analyzers 2000. The external quality control list N also may include the rise time of the turbidity of the positive control, the quantitative value of the positive control, and the like.

FIG. 11 shows an example of a capacitance display area O for showing the electrostatic capacity in time series as an example showing the operation of each sample analyzer 2000 in time series. The electrostatic capacitance is information for detecting whether the pipette tip is properly attached to the suction nozzle described later. The display area O also may include a selection area O1 for changing the display area of the graph. A legend area O2 indicating the origin of each graph also may be displayed. FIG. 11 shows an example of the display area P of the quantitative count of how many times the sample analyzer 2000 has suctioned the sample, the standard sample, or the reagent. The quantitative count, together with the reagent remaining amount, is used to evaluate whether each liquid has been dispensed in the correct amount. The display area P also may include a selection area P1 for changing the display area of the graph. A legend area P2 indicating the origin of each graph also may be displayed.

FIG. 12 shows an example of a display area Q that displays a list of software version information attached to the data processing unit 230 of each sample analyzer 2000. In the display area Q, software program name, program version, program update date and time and the like may be displayed.

In addition, FIG. 12 shows an example of a display region R that displays a list of calculation results of the positive rate calculated on the basis of the determination result that the lesion is positive in the body of the subject for each sample. In the display region R, the information (object) of the population for which the positive rate was calculated, the date and time of aggregation start, the date and time of aggregation completion, the number of devices, the total number of lymph nodes, the number of negative numbers, the number of positive numbers, and the positive rate may be displayed.

FIG. 13 shows an example of a display area in which the positive rates of lymph node metastasis of breast cancer are represented graphically in time series for each lot of reagents. In FIG. 13, arrows indicate the time when the reagent exchange is performed, that is, the time when the reagent lot has changed. In FIG. 13, reference numeral 18a indicates the upper limit value of the 99.7% confidence interval. Reference numeral 18b indicates the lower limit value of the 99.7% confidence interval. Reference numeral 18c indicates the transition of the positive rate of the determination result actually acquired from the sample. Reference numeral 18d indicates the transition of the positive rate in all determination results acquired irrespective of the reagent lot.

Immediately after the lot of reagent has changed, the upper limit value and the lower limit value of the 99.7% confidence interval tend to be large because the number n of determination results is small. However, the limit values decrease as the number n of determination results accumulates. Therefore, when considering the reagent lot, it is necessary to monitor the accuracy in another group immediately after reagent replacement.

FIG. 14 shows an example of a display area in which the positive rate of lymph node metastasis of breast cancer is represented by a graph in time series every 50 samples. In FIG. 14, the reference numeral 19a indicates the upper limit value of the 99.7% confidence interval. Reference numeral 19b indicates the lower limit value of the 99.7% confidence interval. Reference numeral 19c indicates the transition of the positive rate of the determination result actually obtained from the sample. Reference numeral 19d indicates the transition of the positive rate in all determination results acquired regardless of the reagent lot.

When the accuracy is monitored with a positive rate every predetermined number of samples, the upper limit value and the lower limit value of the 99.7% confidence interval are stable. Therefore, by monitoring the accuracy for each predetermined number of samples, quality control can be performed without being affected by reagent replacement or the like.

FIG. 15 shows an example of a display area in which the positive rate of lymph node metastasis of breast cancer is represented by a graph in time series for all determination results obtained. In FIG. 15, the reference numeral 20a indicates the upper limit value of the 99.7% confidence interval. reference number 20b indicates the lower limit value of the 99.7% confidence interval. Reference numeral 19c indicates the transition of the positive rate of the determination result actually obtained from the sample. Reference numeral 20c indicates the transition of the positive rate of the determination result actually obtained from the sample.

When the accuracy is monitored with a positive rate every predetermined number of samples, the upper limit value and the lower limit value of the 99.7% confidence interval are stable. Therefore, by monitoring the accuracy of the overall determination result, quality control can be performed without being affected by reagent replacement or the like.

In each display area, for example, a warning D5 indicating a time point when the quality control failure occurs as shown in FIG. 5, a cursor F2 for selecting each legend in each display area, the specific measurement data of each information displayed by selection of each legend, and an area F3 indicating the date and time when the measurement data were acquired and the like may be displayed.

In the present disclosure, the output data also may be generated for each test item, and information of a sample of a plurality of test items may be included in one area. When information of samples of a plurality of test items is included in one area, it is preferable that the plurality of test items can be acquired by the same sample analyzer 2000. The output data may be data for displaying the ratios acquired from two or more managed sample analyzers 2000 having different measurement principles in the same test item in one area. The output data also may be data for displaying in one area a ratio acquired from two or more sample analyzers 2000 to be managed with the same measurement principle for the same examination item and different models.

In the present disclosure, the test item is not limited insofar as it is a test for detecting a lesion. Examples of lesions include ischemic diseases (especially the heart, brain, lung, large intestine and the like); allergic diseases such as allergic bronchitis and glomerulonephritis; dementia, Parkinson's disease, amyotrophic lateral sclerosis, myasthenia gravis (benign epithelial tumor, benign non-epithelial tumor, malignant epithelial tumor, malignant non-epithelial tumor); renal diseases such as acute kidney disease, chronic renal disease and the like; metabolic diseases (abnormal carbohydrate metabolism such as diabetes, abnormality of lipid metabolism, electrolyte abnormality); infectious diseases (bacteria, virus, rickettsia, chlamydia, fungi, protozoa, parasites) and the like can be mentioned. Neurodegenerative diseases including Alzheimer type (juvenile) dementia and cerebrovascular dementia; renal diseases such as chronic kidney disease; malignant epithelial or malignant non-epithelial tumor; metabolic diseases such as diabetes, fatty liver, obesity and the like are preferable examples of lesions. Particularly preferable as a lesion are malignant tumors, examples of malignant tumors include respiratory system malignant tumor arising from the trachea, bronchus or lung and the like; respiratory system malignancy such as nasopharynx, esophagus, stomach, duodenum, jejunum, ileum, cecum, appendix, ascending colon, transverse colon, sigmoid colon, rectum or anus and the like, malignant tumor of the gastrointestinal system; a liver cancer; a pancreatic cancer; a urinary system malignant tumor arising from bladder, ureter or a kidney; female reproductive system malignant tumor arising from ovary, oviduct and uterus and the like; breast cancer; prostate cancer; skin cancer; endocrine system malignant tumor such as the hypothalamus, pituitary gland, thyroid, parathyroid gland, and adrenal gland; solid malignant tumor originating from the central nervous system; malignant tumor of bone soft tissue. Other more preferable examples of malignant tumor include respiratory epithelial malignant tumor such as lung cancer (squamous cell carcinoma, small cell carcinoma, large cell carcinoma, adenocarcinoma); stomach cancer, duodenal cancer, colon cancer (S gastrointestinal epithelial malignancies such as colorectal cancer, rectal cancer), liver cancer, pancreatic cancer; bladder cancer; thyroid cancer; ovarian cancer; breast cancer; prostate cancer. Most preferable are breast cancer, colon cancer, gastric cancer, non small cell lung cancer.

The tumor also includes metastatic cancer. Lymph tissue, peritoneal cavity, thoracic cavity, bone marrow, meningeal membrane, liver, lung and the like can be cited as cancer metastasis destinations.

For example, the test items may be classified according to measurement principle. Measurement principles include nucleic acid detection methods for measuring the presence or absence of a specific DNA sequence and the expression level of mRNA, immunological measurement methods for qualitative or quantitative determination of protein, biochemical measurement methods for detecting the amount of enzyme activity or amount of a compound and the like. In the nucleic acid detection method, for example, the expression level of a cancer gene or the like can be measured by the RT-LAMP (Reverse Transcription-Loop-Mediated Isothermal Amplification) method, quantitative RT-PCR method, microarray method, RNA-Seq method or the like. In the nucleic acid detection method, abnormality (mutation or the like) such as EGFR (epidermal growth factor receptor) gene or the like can be detected by the PCR method, sequencing method or the like. It is also possible to use a blood count method in a blood sample by an electric resistance method and flow cytometry, a blood coagulability measurement method, a urine qualitative method for detecting an enzyme activity or an amount of a compound in a urine sample, urinary solid component analysis method for detecting the minute or the like in the test items.

In the immunological assay method, tumor markers and the like can be measured by the ELISA (Enzyme-Linked ImmunoSorbent Assay) method.

The most preferable test item to which the monitoring data generation method of the present disclosure is applied is the expression level of CK19 mRNA that measures cancer metastasis to lymphatic tissues.

2. Index for Quality Control and Method of Generating Quality Control Data

The ratio of samples determined to be positive or negative by a plurality of sample analyzers can be calculated from the plurality of determination results acquired from the plurality of sample analyzers 2000, for example, according to the following method.

One or a plurality of sample analyzers 2000 are communicably connected to the generating apparatus 3000 via a network. This connection also may be via the server 4000.

In the sample analyzer 2000, a determination result 4010 regarding whether the sample is positive or negative, for example, the degree to which the lesion is positive, is acquired for a plurality of sample analyzers 2000. These data are transmitted to the generating apparatus 3000 either directly or via the server 4000.

The generating apparatus 3000 can acquire the determination result 4010 from the sample analyzer 2000 directly or through the server 4000.

For example, quality control data are created according to the following steps.

First, a determination result 4010 regarding whether the sample is positive or negative, for example, the degree to which the lesion is positive, is acquired for a plurality of sample analyzers 2000. The ratio of samples determined to be positive or negative by a plurality of sample analyzers can be calculated from the plurality of determination results acquired from the plurality of sample analyzers. An index for quality control is generated based on the ratio. Preferably, quality control data 4050 (output data) are generated that can compare the index with the ratio obtained from the sample analyzer to be managed for analysis accuracy.

The output data are user interface data, and are output to, for example, an output unit 720 such as a screen via a web browser or the like, and can be viewed by an operator. It is preferable that the user interface data indicate the ratio and the index in a time series graph.

Although a method of generating the monitoring data 4050 using the generating apparatus 3000 is shown in the example, a part or all of the generation of the monitoring data 4050 may be performed by the operator.

In the present disclosure, a sample of a mammal may be used instead of a human sample. Preferred mammals are humans, monkeys, dogs, cats, rabbits and the like.

A method of generating the determination result will be described in the section of a sample analyzer described later.

The ratio of the sample determined to be positive or negative by the plurality of sample analyzers from a plurality of determination results acquired from the plurality of sample analyzers is, for example, the ratio at which the lesion was determined as positive from the determination results obtained from a plurality of sample analyzers and/or the ratio at which the lesion was determined as negative. The plurality of sample analyzers also may be installed in the same facility or in different facilities.

The ratio is, for example, a positive rate and/or a negative rate of the lesion. Therefore, the specific number of the plurality of sample analyzers is not limited insofar as the ratio can be obtained, and is at least two. Preferably, the plurality is 5 or more, 10 or more, 20 or more, 50 or more, or 100 or more.

For example, all the determination results acquired by the generating apparatus 3000 may be used as a statistical population to calculate the ratio. For example, the ratio may be calculated for each population using a predetermined group as a statistical population. The predetermined group may be at least one group selected from the groups including the reagent lot, a predetermined number of samples, each sample analyzer, each facility in which the sample analyzer is installed, each apparatus model, each country, prefecture, or region, and a person in charge of an examination. When the ratio is calculated for each reagent lot, the present embodiment can include a step of acquiring information on a reagent lot from the sample analyzer 2000.

The ratio of the sample determined to be positive or negative by the sample analyzer to be managed for analysis accuracy is used as quality control information together with the above index. The quality control information is generated as quality control data comparable to the ratio and the index.

The index is not limited insofar as it is a value that can be precision controlled using the ratio. It is preferable that the index is a value calculated by statistical processing from a plurality of determination results. More preferably, it is a value calculated by statistical processing from a plurality of determination results collected before measurement of the sample. It is preferable that the index has already been calculated when the ratio is calculated. The index may vary depending on the number of cumulative samples up to the point of generating the index. The index may be updated, for example, when the reagent lot or the like is changed. The index also may be updated when the treatment method of the subject is changed. The plurality of determination results also may originate from the same facility or from a plurality of facilities. For example, at least one selected from the upper limit value and the lower limit value of the confidence interval can be cited as an index. A value obtained by considering the average value, the standard deviation, the variance and the like of the ratio in the statistical population also may be used as an index. For example, the index may be an average value of the ratios acquired from the plurality of sample analyzers by the time of generating the index. Preferably, both the upper limit value and the lower limit value of the confidence interval can be used as indices. As a confidence interval, preferably 99.7% confidence interval, 99% confidence interval, 95.4% confidence interval, 95% confidence interval, or 68.3% confidence interval can be used. More preferably it is a 99.7% confidence interval. For example, when adopting a 99.7% confidence interval, the upper limit value is ((average value of ratio in population) + (3× standard deviation of ratio in population), and the lower limit value is (average value of the ratio in the population) - (standard deviation of the ratio in the 3× population). Methods of calculating the confidence interval are well-known.

The estimation formula of the range of the population ratio (confidence interval) is as follows.

Function 1

$$\frac{n}{n+Z^2}\left(p+\frac{Z^2}{2n}\pm Z\sqrt{\frac{p(1-p)}{n}+\frac{Z^2}{4n^2}}\right)$$

(In the formula, n represents the number of samples after the reagent lot was changed, p represents the average value of the cumulative samples, and Z represents a constant).

The index can be determined in advance by using a plurality of determination results previously acquired by the generating apparatus 3000. The specific number of the plurality of determination results is not limited insofar as a reliable value can be acquired.

Showing the ratio together with the index corresponding to the ratio is not limited insofar as the ratio and the index are displayed together on one screen or on one sheet, for example, and at least temporarily both can be viewed at the same time. For example, the ratio and the value of the index may be shown side by side; the value of the ratio may be shown as a scattergram or graph, and the index may be shown as a border line and the like.

The ratio may constitute information of one quality control in a state that can be indicated together with the index corresponding to the ratio.

For example, the ratio may be calculated for each test item with respect to a plurality of test items. In this case, each ratio can be indicated as quality control information together with an index corresponding to each ratio.

The quality control information may be output to the output unit 720 such as a screen, a printer or the like as the monitoring data 4050 which are user interface data. When the monitoring data 4050 are displayed on a screen or the like, it is displayed via browser software or the like.

It is preferable that the sample analyzer 2000 transmits the determination result 4010 to the generating apparatus 3000 and/or the server 4000 within a predetermined time (preferably within 5 minutes) after obtaining the determination result 4010. It also is preferable that the operator or the generating apparatus 3000 acquires the determination result 4010 from the sample analyzer 2000 or the server 4000 at predetermined intervals (preferably every 5 minutes). It is preferable that the acquired data and the ratio calculated from a plurality of determination results are included in time series information on each quality control. It also is preferable that the monitoring data 4050 are also generated in real time every time the determination result 4010 is acquired. In this way the operator can know the occurrence of a quality control abnormality in a short time from the occurrence of the abnormality.

3. Quality Control Method

An embodiment of the present disclosure relates to a quality control method for managing the analytical accuracy of a sample analyzer including a step of evaluating the analysis accuracy of a sample analyzer to be managed based on an index generated by the generating method described in section 1 above.

In the present embodiment, when the ratio obtained from the sample analyzer to be managed deviates from the range indicated by the index, it is determined that the analysis accuracy has decreased. Alternatively, when the ratio is within the range indicated by the index, it is determined that the analysis accuracy is maintained. When it is determined that the analysis accuracy has deteriorated, a warning or the like may be issued. The warning may be issued to the operator or may be issued to the user operating the sample analyzer 2000. The warning also may be output to the output unit 720 of the generating apparatus 3000. For example, a mark indicating a warning may be displayed on the screen. The mark indicating a warning may be displayed in accordance with the display area of the quality control information for which the warning is issued.

4. Monitoring Data Generation System and its Construction Method

4-1. System Structure

FIG. 3 is a schematic diagram showing an example of the structure of a monitoring data generation system 7000 (hereinafter also simply referred to as "generation system 7000") according to the third embodiment. The generation system 7000 includes a monitoring data generating apparatus 3000 for managing the state of the sample analyzer, and a sample analyzer 2000 installed at a user facility such as a hospital or an examination center. The generating apparatus 3000 is connected via a communication network such as the Internet or a dedicated line so as to be capable of communicating data. In the present disclosure, being connected in a communicable manner includes a case where the generating apparatus 3000 and the sample analyzer 2000 are directly connected, and a case where the generating apparatus 3000 and the sample analyzer 2000 are indirectly connected via the server 4000 or the like. The generation system 7000 also may include a portable terminal 6000 such as a tablet or the like. The portable terminal 6000 can inspect the monitoring data 4050 and the like. The sample analyzer 2000 and the generating apparatus 3000 are described above. In the generation system 7000, the sample analyzer 2000 and the generating apparatus 3000 may be installed in the same facility or may be installed in different facilities.

4-2. System Construction Method

The fourth embodiment relates to a method of constructing a monitoring data generation system for managing the state of sample analyzers, wherein the generation system 7000 includes a step of preparing the generating apparatus 3000, and a step of preparing the sample analyzer 2000. This embodiment also may include a step of preparing the server 4000. The present embodiment also may include a step of communicably connecting the generating apparatus 3000 and the sample analyzer 2000.

4-3. Structure of Sample Analyzer

The sample analyzer 2000 according to the present embodiment may be a gene amplification detection apparatus that measures the presence or absence of a specific DNA sequence and the expression level of mRNA by a nucleic acid detection method, an immunological measuring device for conducting qualitative or quantitative determination of proteins or the like by an immunological technique, a biochemical measuring apparatus for detecting an enzyme activity or an amount of a compound by a biochemical measurement method, a blood cell counter for counting the number of blood cells in a blood sample, a blood coagulation measuring apparatus for evaluating blood clotting ability, a urine qualitative analyzer for detecting an enzyme activity in a urine sample or an amount of a compound, a urinary solid component analysis apparatus for detecting a solid component in a urine sample and the like.

Preferably, the sample analyzer 2000 is configured to analyze tumors. More preferably, the sample analyzer 2000 analyzes cancer metastasis.

FIG. 4 shows an example of a configuration of a gene amplification detection apparatus as an example of the sample analyzer 2000. The sample analyzer 2000 is capable of outputting as the measurement data the presence or amount of a target nucleic acid (target gene) contained in a sample, that is, excised tissue or the like from the subject, as the measurement data. More specifically, the sample analyzer 2000 is preferably used as a genetic diagnostic system for cancer lymph node metastasis to detect and quantify a target nucleic acid (cancer gene; mRNA) by performing pretreatment (such as homogenization, extraction treatment) of lymph nodes (samples) excised from a human body, preparing a solubilized extract solution as a measurement sample for nucleic acid detection, amplifying the target nucleic acid (target gene) present in the measurement sample by the LAMP method, and measuring the turbidity of the solution generated along with amplification.

The sample analyzer 2000 is used, for example, for intraoperative rapid diagnosis, specifically, it is used for examinations during surgery such as cancer. For example, the sample analyzer 2000 obtains the concentration of a cancer-derived gene (target nucleic acid) in a lymph node from a lymph node excised during surgery, and referring to this, the doctor diagnoses the degree of cancer metastasis during the operation, and determines the extent of excision of the node. Therefore, the output of the sample analyzer 2000 is required to have high reliability and quickness.

As shown in FIG. 2, the sample analyzer 2000 includes a preprocessing unit 210 for preparing a measurement sample by performing pretreatment such as homogenization on a sample obtained from a human body or the like, and a measurement unit 220 for performing detection processing of the target nucleic acid. The sample analyzer 2 has a data processing unit 230 for performing data processing, data communication, or the like. The data processing unit 230 also has a function as a control device that receives measurement data from both the preprocessing unit 210 and the measurement unit 220, and transmits operation instruction signals and the like to the preprocessing unit 210 and the measurement unit 220. That is, the preprocessing unit 210 and the data processing unit 230 function as a preprocessing device, and the measuring unit 220 and the data processing unit 230 function as a nucleic acid detecting device. The data processing unit 230 is connected to a network, and the data processing unit 230 can send the measurement data transmitted from the sending unit of each of the preprocessing unit 210 or the measurement unit 220 to the generating apparatus 3000 by the data transmission/reception function with the generating apparatus 3000 or the server 4000 described above.

FIG. 19 is a schematic diagram showing an example of the structure of the preprocessing unit 210. As shown in FIG. 19, the preprocessing unit 210 mainly includes a preprocessing section 211 which performs preprocessing on a sample to obtains a measurement sample, a measuring section 212 which measures the preprocessed measurement sample. The preprocessing section 211 includes a sample setting unit 213 for setting a container containing a sample, a reagent adding unit (reagent dispensing pipette) 214 for adding a preprocessing reagent to a sample container set in the sample setting unit 213, a blender (homogenizing unit) 215 for homogenizing the sample, a pipette (dispensing unit) 216 for dispensing the homogenized (preprocessed) measurement sample, and a transfer section (not shown) for transferring the pipette 216 to the measuring section 212 and the measuring unit 220.

Upon receiving a measurement start instruction signal from the data processing unit 230, the preprocessing unit 210 adds a preprocessing reagent to the sample of the sample setting unit 213 (preprocessing reagent addition process), and homogenizes the sample by the blender 215 to obtain a measurement sample (homogenization process). Then, the measurement sample is suctioned by the pipette 216, and in the case of normal nucleic acid detection, the pipette 216 moves to the measuring unit 220, and the sample is discharged into the sample container 22 set in the measuring unit 220.

On the other hand, in the case of monitoring, the pipette 216 that has suctioned the measurement quality control sample prepared by preprocessing the preprocess quality control sample for pretreatment moves to the light absorbance measuring cell 217, and the measurement quality control sample is discharged to the light absorbance measurement cell 217 of the measuring unit 212. Light is irradiated from the light source 218 on the light absorbance measuring cell 217, the light is detected by a detector (light receiving unit) 219, and the absorbance of the preprocessed measurement sample is measured. The measured absorbance (measured data) is sent by a transmitter (not shown) of the preprocessing unit 210 to the data processing unit 230. Note that the preprocessing is not limited to homogenization and also may be nucleic acid extraction processing or the like.

FIG. 20 is a plan view showing an example of the structure of the measuring unit 220. The measuring unit 220 is configured as shown in FIG. 20, and details of this apparatus are described in Japanese Patent Application Publication No. 2005-98960. Here, the structure, operation and the like of the measuring unit 220 will be briefly described First, the pipette moved from the preprocessing unit 210 discharges the preprocessed sample into the sample container 22 set in the sample container 22 set in the sample container setting hole 21a of the sample container base 21.

A primer reagent container 32a containing a primer reagent of a target nucleic acid, for example, CK 19 (cytokeratin 19), and an enzyme reagent container 32b containing an enzyme reagent are placed in the primer reagent container setting hole 31a and the enzyme reagent container setting hole 31b on the front left side of the reagent container setting unit 30. A primer reagent container 32a containing primer reagent of an internal standard substance Arabidopsis (Arabidopsis is hereinafter referred to as "arabido") is set in the primer reagent container setting hole 31a on the front right side of the reagent container setting unit 30. Arabido solution container 32d containing a predetermined amount of arabido is set in the arabido container setting hole 31d on the front right side.

Two racks 42 each containing 36 disposable pipette tips 41 are fitted in recesses (not shown) of the tip setting unit 40. Two cell units 66a of the detection cell 65 are set in the two detection cell set holes of the reaction unit 61 of each reaction detection block 60a.

In this state, when the operation of the measuring unit 220 starts and after the arm 11 of the dispensing mechanism 10 is moved from the initial position to the tip setting unit 40, two syringe units 12 of the the dispensing mechanism 10 are moved downward in the tip setting unit 40. In this way the tip ends of the nozzles of the two syringe unit 12 are press-fitted into the upper opening of the two pipette tips 41, so that the pipette tips 41 are automatically attached to the tip ends of the nozzles of the two syringe units 12. Then, after the two syringe units 12 are moved upward, the arm 11 of the dispensing mechanism 10 is moved in the X axis direction above the two primer reagent containers 32a containing arabido primer reagent and a target nucleic acid set in the reagent container setting base 31. When the two syringe units 12 are moved in the downward direction, the tips of the two pipette tips 41 attached to the nozzles of the two syringe units 12 are respectively inserted in the liquid surface of the arabido and target nucleic acid printers in the two primer reagent containers 32a. Then, the primer reagents of CK19 and arabido in the two primer reagent containers 32a are suctioned by the pump section of the syringe unit 12.

After the suction of the primer reagents, and after the two syringe units 12 are moved upward, the arm 11 of the dispensing mechanism 10 moves above the reaction detection block 60a positioned on the innermost side (the front side of the apparatus). In this case, the arm 11 of the dispensing mechanism 10 is moved so as not to pass above the other second to fifth reaction detection blocks 60a from the inner side. Then, in the reaction detection block 60a on the innermost side, the two syringe units 12 are moved in the downward direction so that the two pipette tips 41 attached to the nozzles 12a of the two syringe units 12 are inserted into the two cell units 66a of the cell 65. Then, using the pump portions of the syringe unit 12, the two primer reagents CK19 and arabido are respectively discharged into two cell units 66a (primer reagent dispensing process).

Thereafter, the pipette tips 41 are discarded, and two new pipette tips 41 are automatically attached to the tips of the nozzles of the two syringe units 12, and in substantially the same operation as above, the enzyme reagent is discharged into the two cell units 66a of the detection cell 65 (enzyme reagent dispensing process). Thereafter, in a similar manner, the arabido solution in the arabido solution container 32d is discharged to the two cell units 66a of the detection cell 65. Then, similarly, the sample (measurement sample) of the sample container 22 is discharged to the two cell units 66a of the detection cell 65 (sample dispensation process). In this way the sample for detecting the target nucleic acid is adjusted in one cell unit 66a of the detection cell 65, and the sample for detecting arabido is adjusted in the other cell unit 66a.

The lid closing operation of the detection cell 65 is performed after the primer reagent, the enzyme reagent, the arabido solution and the sample are discharged into the cell unit. After the lid closing operation is completed, the liquid temperature in the detection cell 65 is heated from about 20°C to about 65°C by using the Peltier module of the reaction unit 61, whereby the target gene (CK 19) and arabido are amplified by the LAMP method. Then, white turbidity due to magnesium pyrophosphate produced along with amplification is detected by a turbidimetric method. Specifically, light having a diameter of about 1 mm is emitted from the LED light source unit 62a of the turbidity detection unit 62 on the cell unit 66a of the detection cell 65 during the amplification reaction via the light irradiation groove of the reaction unit 61. Then, the irradiated light is received by the photodiode light receiving unit 62b. In this way liquid turbidity in the cell unit 66a of the detection cell 65 during the amplification reaction is detected (monitored) in real time. Measurement data of measured CK19 and measurement data of measured arabido measured by the photodiode light receiving unit 62b are transmitted to the data processing unit 230 by a sending unit (not shown) of the measurement unit 220.

Next, the structure of the data processing unit 230 will be described. FIG. 21 is a block diagram showing a structure of the data processing unit 230. The data processing unit 230 is realized by the computer 230a. As shown in FIG. 21, the computer 230a includes a main body 231, an output unit 232, and an input unit 233. The main body 231 includes a processing unit 231a (CPU: Central Processing Unit, GPU: Graphics Processing Unit or MPU: Micro Processing Unit), ROM (read-only memory) 231b, main storage unit (RAM: random access memory) 231c, auxiliary storage unit (hard disk) 231d, a reading device 231e, an input/output (I/O) interface 231f, a communication interface 231g, and an output interface 231h, wherein the processing unit 231a, ROM 231b, main storage unit 231c, auxiliary storage unit 231d, reading device 231e, I/O interface 231f, the communication interface 231g, and the output interface 231h are connected by a bus 231j. The main storage unit 231c and the auxiliary storage unit 231d are collectively referred to as a storage unit.

The reading device 231e can read a computer program 234a for causing the computer to function as the information processing unit 230 from a portable recording medium 234, and install the computer program 234a in the hard disk 231d.

The preprocessing unit 210, and the measuring unit 220 are respectively connected via cables to the input/output interface 231f. The input/output interface 231f is connected to the preprocessing unit 210 and the measuring unit 220 so so as to allow communication of data and the output of control signals to the preprocessing unit 210 and the measuring unit 220. A control unit (not shown) of the preprocessing unit 210 and the measuring unit 220 which received the control signal decodes the control signal and drives the actuators of the respective mechanisms in accordance with the control signal. Measurement data can be transmitted from the preprocessing unit 210 and the measuring unit 220 to the data processing unit 230, and the CPU 231a performs predetermined processing when the data processing unit 230 receives the measurement data.

The processing by the processing unit 231 a of the measurement data acquired by the measuring unit 220 will be described in more detail. As described above, the measurement data of the target nucleic acid and the measurement data of the arabido measured by the photodiode light receiving unit 62b are transmitted from the measuring unit 220. When the horizontal axis represents time and the vertical axis represents turbidity (OD: Optical Density), measurement data of the target nucleic acid as shown in FIG. 22 are obtained in the processing unit 231 a. Then, from the measurement data of the target nucleic acid, the processing unit 231a detects the amplification rise time which is the time until the copy number of the target gene (for example, CK19) in the sample sharply increases. On the other hand, the processing unit 231a creates measurement data of arabido in which time is plotted on the horizontal axis and turbidity is plotted on the vertical axis based on arabido measurement data, and and obtains the arabido amplification rise time based on the measurement data. The processing unit 231a corrects the amplification rise time of the target nucleic acid based on the amplification rise time of arabido. ¥By making such correction, it is possible to eliminate the influence of the amplification inhibiting substance in the sample on the measurement result. Then, based on the calibration curve prepared from the measurement data of the calibrator shown in FIG. 23, the expression amount of the target gene, that is, the quantitative data (copy number) of the target nucleic acid is calculated from the amplification rise time of the corrected target nucleic acid. Here, the calibration curve shown in FIG. 23 is a curve obtained by taking the amplification rise time on the horizontal axis and the copy number of the target nucleic acid [copy number/μL] on the vertical axis; and in general, the concentration increases with a shorter the amplification rise time.

The data processing unit 230 also may be capable of receiving the monitoring data 4050 transmitted from the generating apparatus 3000, which will be described later, directly or via the server 4000. The processing unit 231a also may receive the monitoring data 4050 via the communication unit 231g, and display the monitoring data 4050 on the output unit 231h.

4-4. Server

The fifth embodiment relates to a server 4000. The server 4000 is realized by a computer. Since the structure of the computer that realizes the server 4000 is the same as the structure of the computer 710 that implements the generating apparatus 3000, its description will be omitted.

As shown in FIG. 31, the auxiliary storage unit (hard disk) of the computer configuring the server 4000 includes a calibrator-control database 4100 for storing status information on the state of the sample analyzer 2000, a determination result database 4010DB, a sample processing apparatus operation database 4040, and a monitoring information database 4050DB.

FIG. 24 is a schematic diagram showing an example of the calibrator-control database 4100. In the calibrator-control database 4100, for example, has a field F1 for storing the number (acceptance number) of the accepted data, a field F2 for storing data reception date, a field F3 for storing data reception time, a field F4 for storing the model code of the sample analyzer, a field F5 for storing a device ID individually assigned to each sample analyzer, a field F6 for storing an operation status code indicating the state of the apparatus or an error code indicating the type of abnormality of the apparatus, field F7 for storing the name of the operator who performed the data updating process, a field F8 for storing a data processing section, a field F9 for storing information on the reagent lot (lot number and the like of the reagent), a field F10 for storing the copy number of the positive control and the rise time of the turbidity, a field F11 for storing the copy number of the negative control and the rise time of the turbidity, a field F12 for storing the copy number of the first calibrator and the rise time of the turbidity, a field F13 for storing the copy number of the second calibrator and the rise time of the turbidity, a field F14 for storing the copy number of the third calibrator and the rise time of the turbidity, and a field F15 for storing the slope of the calibration curve created from the three calibrators. Fields F10 to F14 store data for each test item.

FIG. 25 is a schematic diagram showing an example of the determination result database 4010DB. In the determination result database 4010DB, for example, a field F21 for storing a receiving number, a field F22 for storing the data reception date, a field F23 for storing data reception time, a field F24 for storing the model code of the sample analyzer, a field F25 for storing an apparatus ID individually assigned to each sample analyzer, a field F26 for storing an identification number (ID) of each sample, and a field F26 for storing the determination result of each sample for each test item are provided.

FIG. 26 is a schematic diagram showing an example of the sample processing apparatus operation database 4040. In the sample processing apparatus operation database 4040, for example, a field F31 for storing a receiving number, a field F32 for storing the data reception date, a field F33 for storing the data reception time, a field F34 for storing a model code of the sample analysis apparatus, a field F35 for storing the apparatus ID individually assigned to each sample analyzer, a field F36 for storing the electrostatic capacity of the pipette, a field F37 for storing the pipette quantitative count, a field F38 for storing the pipette suction and discharge pressures of the reagent, a field F39 for storing the environmental temperature of the block, a field F40 for storing the remaining amount of the reagent and the like are provided.

FIG. 27 is a schematic diagram showing an example of the monitoring database 4050DB. In the monitoring database 4050DB, for example, a field F41 for storing the receiving number, a field F42 for storing the data reception date, a field F43 for storing the data reception time, a field F44 for storing the model code of the sample analyzer, a field F45 for storing an apparatus ID individually assigned to each sample analyzer, and a field F46 for storing the ratio calculated by the generating apparatus 3000.

Although the embodiment described above description provides a field for storing a receiving number, a field for storing data reception date, a field for storing data reception time, a field for storing a model code of the sample analyzer, and a field for storing the apparatus ID allocated individually to the respective sample analyzers, the information common to each database also may be provided in a separate list and the list and the data in each database may be stored, for example, in association with a receiving number or the like.

A server program such as a server operating system (OS) such as Linux (registered trademark), UNIX (registered trademark), Microsoft Windows Server (registered trademark) and the like is installed in the auxiliary storage unit of the computer, and the computer executes the database server program so that the computer functions as the server 4000. The determination result 4010, the calibration data 4020, the control data 4030, and the operational data 4050 of the sample processing apparatus 2000 transmitted from the sample analyzer 2000, are stored, for example, in the auxiliary storage unit of the server via the communication unit of the server.

4-5. Monitoring Data Generating Apparatus

FIG. 28 is a block diagram showing an example of the structure of the generating apparatus 3000. The generating apparatus 3000 is realized by the computer 7a. As shown in FIG. 28, the generating apparatus 3000 includes a main body 710, an output unit 720 such as a screen, a printer, and the like, and an input unit 730 such as a keyboard or a touch panel. The main body 710 includes a processing unit (CPU, GPU or MPU) 710a, a ROM 710b, a main storage unit (RAM) 710c, an auxiliary storage unit (hard disk) 710d, a reading device 710e, an input/output interface 710f, a communication unit (communication interface) 710g, and an output interface 710h, and the processing unit 710a, ROM 710b, auxiliary storage unit 710c, hard disk 710d, reading device 710e, input/output interface 710f, communication unit 710g, and output interface 710h are connected by a bus 710j.

The reading device 710e can read the computer program 740a for causing the computer to function as the generating apparatus 3000 from a portable recording medium 740, and install the computer program 740a in the auxiliary storage unit 710d.

An electronic mail program also may be installed in the auxiliary storage unit 710d. By executing the e-mail program, the generating apparatus 3000 functions as a client of the e-mail system and can send e-mail.

A web browser program also may be installed in the auxiliary storage unit 710d. By executing such a web browser program by the processing unit 710a, the generating apparatus 3000 functions as a web client, and the various data acquired from the server 4000 and the monitoring data 4050 generated by the processing unit 710a can be displayed as a window on the output unit 720.

The server 4000 also may be integrated with the generating apparatus 3000. In this case, the respective databases described in section 3-4 above are stored in the auxiliary storage unit 710c of the generating apparatus 3000.

4-6. Operation of Sample Analyzer

An example of the operation of the sample analyzer 2000 will be described with reference to FIG. 29. Here, an explanation will be given by using an example in which each database described in section 3-4 above is stored in the server 4000, and, as described in 3-5 above, the server 4000 also may be integrated with the generating apparatus 3000.

The sample analyzer 2000 is started before the inspection starts (step S101). The activation process is executed as follows. A power button (not shown) is provided in the measuring unit 220 of the sample analyzer 2000, and the power source of the measuring unit 220 is turned on when the power button is pressed by the user. When the power supply is turned on, the measurement unit 220 executes the origin adjustment and the operation confirmation of the mechanical parts, shifts to the standby state, and the activation process is completed. When the processing unit 231a of the data processing unit 230 detects that the measuring unit 220 has shifted to the standby state, the processing unit 231a of the data processing unit 230 generates communication data for notifying that the sample analyzer 2000 has been activated, and transmits the communication data to the server 4000 via the communication unit 231g (step S102). The communication data include a model code of the sample analyzer, an apparatus ID of the sample analyzer, and an operational status code of the sample analyzer.

The model code and the serial number of the sample analyzer 2000 are stored in the hard disk 231d of the data processing unit 230. The operational state code is set to "0" when the state of the sample analyzer is activated (activation state), set to "1" to start measurement of the calibrator to create a calibration curve (calibration curve measurement start state), set to "2" for the state in which the calibrator measurement was completed for preparation (calibration curve measurement end state), set to "3" for the state in which the created calibration curve was approved by the user ("calibration curve validation state"), set to "4" for the measurement of the sample, set to "5" for the state in which the measurement of the sample is completed (sample measurement end state), and set to "6" for the state in which the sample analyzer (measurement unit) is shut down (measurement unit end state). The processing unit 231a of the data processing unit 230 generates communication data associating the model code and serial number stored in the auxiliary storage unit 231d and the operation state code corresponding to the device state at that time ("0" in this case). The communication data also may include operational data 4040.

Next, for example, a calibration curve is created to be used for quantification of nucleic acids, proteins, compounds, and the like corresponding to each test item. The preparation of the calibration curve is carried out by measurement of the calibrator by the measuring unit 220. The calibrator includes, for example, a predetermined amount of a standard substance of a test item. In preparing the calibration curve, it is preferable to use two or three types of calibrators having different amounts of standard substances. Hereinafter, the processing by the processing unit 231a will be described taking as an example the case where the test item is an item for measuring the expression level of mRNA (target nucleic acid).

The sample containers 22 containing the above three calibrators are set by the user on the sample container base 21 of the measuring unit 220 prior to the calibration curve preparation process. Then, in order to start the calibration curve creating process (calibrator measuring process) of the measuring unit 220, the user inputs a start instruction by the input unit 233 of the data processing unit 230. Upon receiving an instruction to start the calibration curve measurement (step S103), the processing unit 231a generates communication data for notification of the start of the calibration curve measurement and transmits the communication data to the server 4000 or the generating apparatus 3000 via the communication unit 231g (step S104). The communication data include an operation state code "1" indicating a calibration curve measurement start state. Thereafter, the sample analyzer 2000 executes measurement by the calibrators (step S105).

The process in step S105 will be specifically described. Upon receiving the measurement start instruction signal, the measuring unit 220 performs, for each of the three calibrators, a primer reagent dispensing process, an enzyme reagent dispensing process, and a calibrator solution dispensing process for dispensing the calibrator of the sample container 22 into one cell unit 66a of the detection cell 65. Thereafter, the measurement unit 220 amplifies the target nucleic acid by LAMP (gene amplification) reaction by controlling the temperature in the detection cell 65 to a temperature necessary for denaturation of the nucleic acid, annealing of the primer, and elongation reaction, and performs detection processing for detecting the turbidity in the cell unit 66a of the detection cell 65 during the amplification reaction by the turbidity detection unit 62.

Then, the measuring unit 220 transmits the optical information (measurement data) reflecting the detected turbidity to the data processing unit 230. Upon receiving the measurement data of each calibrator from the measuring unit 220, the processing unit 231a performs analysis processing of the measurement data. In the analysis process, the turbidity rise time of each calibrator is calculated. Note that the turbidity rise time is calculated as the time until turbidity obtained as measurement data exceeds a predetermined value. The processing unit 231a creates a new calibration curve from the rise time calculated for each calibrator based on the currently stored calibration curve or the turbidity corresponding to the copy number of each calibrator.

After creating the calibration curve, the processing unit 231a generates communication data for notifying the end of the calibration curve measurement, and transmits the communication data to the server 4000 via the communication unit 231g (step S106). The communication data also may include the operation state code "2" indicating the calibration curve measurement end state, the calibration data 4020, and the operation data 4040.

The created calibration curve is displayed on the output unit 232 of the data processing unit 230. The processing unit 231a also may accept authentication (validation) of the calibration curve by a user or the like. The user confirms the calibration curve displayed on the output unit 232, and executes the validation of the calibration curve if there is no abnormality in the calibration curve. Upon receiving the validation of the calibration curve (step S107), the processing unit 231a generates communication data for notifying that the validation of the calibration curve has been executed, and transmits the communication data to the server 4000 via the communication unit 231g (step S108). The communication data include an operation state code "3" indicating a calibration curve validation state, calibration data 4020, and operation data 4040.

The rise time of the turbidity of the calibrators and the measurement data of the calibrators are transmitted from the data processing unit 230 to the server 4000 via the communication unit 231g. In addition to the rise time and the copy number of the calibrator, these measurement data include information such as the device ID of the sample analyzer that measured the calibrator, the lot number of the calibrator, and the measurement date and time.

Next, the user performs preprocessing using a sample. At the time of sample measurement, the tissue and the like are set in the sample setting unit 213 of the preprocessing unit 210. Then, in order for the user to start preprocessing of the sample, the input unit 233 of the data processing unit 230 of the sample analyzer 2000 inputs an instruction to start sample measurement. Upon receiving the instruction to start the sample measurement (step S109), the processing unit 231a generates communication data for notifying the start of sample measurement, and transmits the communication data to the server 4000 (step S110). The communication data include an operation state code "4" indicating a sample measurement start state.

The process of step S109 will be specifically described. Upon receiving a measurement start instruction signal (step S111), the preprocessing unit 210 performs the preprocessing reagent addition process and homogenization process on the sample by the preprocessing unit 211 to prepare a measurement sample. This measurement sample is supplied to the measuring unit 212 of the preprocessing unit 210, and the light absorbance is measured. The measurement data of the absorbance is transmitted to the server 4000 by the processing unit 231a via the communication unit 231g (step S112). The processing unit 231 a also may transmit the operation data of the preprocessing unit 210 in the preprocess to the server 4000 in step S110.

Next, the processing unit 231a executes the measurement of the quality control sample (hereinafter also simply referred to as "control") for measuring the sample and controlling the accuracy of the measuring unit 220. Two types of control are used as the control, a positive control (first nucleic acid detection quality control substance) containing a target nucleic acid in a known amount and not containing arabido) which is an internal standard nucleic acid (plant-derived nucleic acid; nucleic acid not possessed by a human body), and an internal control containing a known amount of arabido; negative control) which is an internal standard containing a known amount of arabido and not containing nucleic acid.

The sample container 22 containing the positive control and the sample container 22 containing the arabido control are set on the sample container base 21 of the measuring unit 220.

Upon receiving the measurement start instruction signal, the measuring unit 220 performs a sample dispensing process to dispense the measurement sample prepared from the sample from the block 60a near the dispensing unit 10. One detection cell 65 is provided in one block 60a, and a measurement sample for one sample is allocated to one detection cell 65. Since two cell units 66a are provided in one detection cell 65, one measurement sample can be measured in duplicate by one detection cell 65. Although the same measurement sample may be dispensed into the two cell units 66a, the measurement sample added to one cell unit 66a also may be diluted. In this way it is possible to avoid reaching the limit of amplification, so that so that to achieve more accurate quantification when the target nucleic acid contained in the measurement sample has a high copy number. After dispensing the measurement sample prepared from the sample is complete, a positive control of the sample container 22 is dispensed to one cell unit 66a of the detection cell 65, and a negative control is dispensed to the other cell unit 66a. Subsequently, a primer reagent dispensing process and a reagent dispensing process for dispensing an enzyme reagent are performed on the cell unit 66a into which the measurement sample or control is dispensed. Thereafter, the measuring unit 220 amplifies the target nucleic acid and arabid0 by the LAMP method by controlling the liquid temperature in the detection cell 65 to a temperature suitable for nucleic acid amplification, and the turbidity detection unit 62 detects (monitors) the turbidity in each cell unit 66a of the detection cell 65 in real time (step S113). The result of the detection process is transmitted to the server 4000 via the communication unit 231g by the processing unit 231a (step S114). The processing unit 231a also may transmit the operational data of the measuring unit 220 in the detection processing to the server 4000 in step S113.

When measurement data of the measurement sample, the positive control, and the negative control are detected by the measuring unit 220, the optical information (measurement data) thereof are analyzed by the processing unit 231a. In the analysis process, the amplification rise time of the turbidity, the quantitative value (copy number) of the target nucleic acid or arabido is calculated (step S115). The amplification rise time of turbidity is calculated as the time until the turbidity obtained as optical information exceeds a predetermined value.

The processing unit 231a transmits calculated data of the amount of expression of the target nucleic acid or the amount of expression of arabido to the server 4000 via the communication unit 231g (step S116). The processing unit 231a also displays data of the calculated expression amount of the target nucleic acid on the output unit 232.

Next, the processing unit 231a determines a qualitative determination result 4010 for diagnostic support (that is, whether the lesion reflected by the quantified target nucleic acid is positive or negative) from the quantitative measurement data (amplification rise time, copy number) (step S117). As shown in FIG. 30, this determination is, for example, [ND] when the copy number is compared with a standard range (step S301) and the copy number is within the first reference range (that is, 250 or less) or when the turbidity does not reach the threshold value even after the lapse of the predetermined time in the measurement data shown in FIG. 22, [+] when the copy number is within the second reference range (that is, from 250 to 5×103), and [++] when the copy number is in the third reference range (for example, greater than 5×103) (step S302). Here, "ND" indicates qualitative degree of cancer metastasis such as "no metastasis is detected", "+" means "slight metastasis", "++" means "metastasis is recognized". "Metastasis is positive" when the copy number is in the fourth standard range (for example, greater than 250) (step S303), and ’metastasis is negative" when the copy number is in the first reference range or turbidity is less than the threshold value (step S 304). By displaying a qualitative result useful for definitive diagnosis support from the quantitative measurement data (the amount of cancer-derived cells) by the sample analyzer 2000, the doctor can rapidly determine the excision range during the surgery. The processing unit 231 a transmits the determination result 4010 to the server 4000 via the communication unit 231g (step S118). The processing unit 231a also displays the determination result 4010 on the output unit 232.

When the above determination is completed, the processing unit 231a may generate communication data for notifying the completion of the sample measurement (step S119), and may transmit the communication data to the server 4000 via the communication unit 231g (step S120). The communication data include an operation state code "5" indicating a sample measurement completion state and operation data 4040. The processing unit 231a also outputs the operation data to the output unit 232 (for example, the screen).

When stopping the operation of the sample analyzer 2000, for example, the user operates the input unit 233 of the data processing unit 230 and inputs a shutdown instruction. Upon receiving a shutdown instruction (step S121), the CPU 231a generates communication data for notifying of the shutdown of the sample analyzer 2000 and transmits the communication data to the server 4000 (step S122). The communication data include an operation state code "6" indicating the measurement unit end state. The processing unit 231a also generates operation data 4040 including an operation history such as the number of suction operations of the pipette of the sample analyzer 2000, and transmits the data to the server 4000 (step S123). Upon completion of the shutdown of the sample analyzer 2000, the processor 231a terminates the process.

4-7. Server Operation

The server 4000 performs the following processing in accordance with the operation of the sample analyzer 2000 described in section 3-6 above. The operation of the server 4000 will be described with reference to FIG. 29.

The server 4000 receives the communication data related to the activation process transmitted in step S102 of FIG. 29 (step S201), and stores the communication data in the sample processing apparatus operational database 4040 (step S202).

The server 4000 receives the communication data related to the calibration curve measurement start instruction transmitted in step S104 of FIG. 29 (step S211) and accumulates the communication data in the sample processing apparatus operational database 4040 (step S212).

Upon receiving the calibration data 4020 transmitted in step S106 of FIG. 295 (step S221), the server 4000 stores the data in the calibrator-control database 4100 (step S222). The server 4000 also performs statistical processing using a plurality of calibration data transmitted from a plurality of sample analyzers installed in each facility. Specifically, based on the data transmitted from the sample analyzers 2000 (the data processing units 230) installed in the plurality of facilities, the average value and the standard deviation 1SD in units of one day are obtained for each test item. The server 4000 also obtains 2SD which is double the standard deviation 1SD, and 3SD which is triple the standard deviation 1SD. The average values 1SD, 2SD, and 3SD of the measurement data in units of one day are accumulated in the monitoring database 4050DB of the server 4000. Note that in the monitoring database 4050DB, data of a reference machine which is a sample analyzer serving as a reference for quality control are also stored.

Upon receipt of the communication data concerning acceptance of the calibration curve validation (step S231) transmitted in step S108 in FIG. 29, the server 4000 stores the data in the calibrator-control database 4100 (step S232).

Upon receiving the communication data transmitted in step S108 of FIG. 29, the server 4000 determines whether the calibration curve preparation process is normal based on the calculated average value and 1SD, 2SD or 3SD. The 1SD, 2SD, 3SD are standard values as to whether the received measurement data are normal, and which one of 1SD, 2SD, 3SD is used as the reference value is selected by each facility, and the selected reference value is used for determinations. The determination result is also registered in the monitoring database 4050DB.

When the server 4000 receives the communication data related to reception of the measurement start instruction (step S241) transmitted in step S110 of FIG. 29 (step S241), the server 4000 stores the data in the sample processing apparatus operational database 4040 (step S242).

Upon receiving the communication data related to acceptance of the sample preprocessing start instruction transmitted in step S112 of FIG. 29 (step S251), the server 4000 stores the data in the sample processing apparatus operational database 4040 (step S252).

Upon receiving the control data 4030 transmitted in step S114 of FIG. 29 (step S261), the server 4000 stores the data in the calibration-control database 4100 (step S262).

The server 4000 also performs statistical processing on a plurality of control data 4020 transmitted from a plurality of sample analyzers 2000 installed in each facility. Specifically, an average value and a standard deviation 1SD for each day are obtained based on the control data 4020 transmitted from the plurality of sample analyzers 2000 respectively. The server 4000 also obtains 2SD which is double the standard deviation 1SD, and 3SD which is triple the standard deviation 1SD. The average values 1SD, 2SD, and 3SD of the measurement data in units of one day are registered in the monitoring database 4050DB in the server 4000. Note that control data obtained by measuring the control in the reference machine are also stored in the monitoring database 4050DB.

Upon receiving the communication data related to the quantitative value transmitted in step S116 of FIG. 29 (step S271), the processing unit of the server 4000, also determines whether the sample measurement by the measuring unit is normal based on the calculated average value and 1SD, 2SD, or 3SD. More specifically, the server 4000 determines whether the sample measurement is normal based on the average value of the control data 4020 received during a predetermined past time (for example, the past 24 hours) and the standard deviation 1SD, 2SD, or 3SD. The 1SD, 2SD, 3SD are standard values pertaining to whether the received measurement data are normal, and which one of 1SD, 2SD, 3SD is used as the reference value is selected by each facility, and the selected reference value is used for determinations.

The determination result is also recorded in the monitoring database 4050DB (step S272).

Upon receiving the communication data related to the determination result 4010 transmitted in step S118 of FIG. 29 (step S281), the server 4000 stores the determination result 4010 in the determination result database 4010DB (step S282). If necessary, the processing described in 3-7 also may be performed.

When receiving the communication data transmitted in steps S120, S122, and S123 of FIG. 29 (step S291), the server 4000 stores the communication data in the sample processing apparatus operational database 4040 (step S291).

4-8. Generating Apparatus Operation

The generating apparatus 3000 generates monitoring data 4050 based on the determination result 4010 generated by the sample analyzing apparatus 2000. [fuzzy]The description of each term in section 1-1 above is incorporated herein.

An example of generation processing of monitoring data 4050 will be described with reference to FIG. 31. First, the processing unit 710a of the generating apparatus 3000 acquires, for example, information of a sample over time (step S401). Next, the processing unit 710a acquires operational information (step S402). The processing unit 710a stores the acquired information in the storage unit, and generates the monitoring data 4050 (user-interface) (step S403). The generated monitoring data 4050 are stored in the auxiliary storage unit 710d of the generating apparatus 3000 or transmitted to the server 4000 through the communication unit 710g of the generating apparatus 3000. The processing in steps S401 and S402 may be performed in any order or simultaneously.

The processing unit 710a of the generating apparatus 3000 also performs a procedure for displaying a warning when the ratio deviates from the index range by comparing the ratio with the index, and functions as a quality control device.

Monitoring Method for Managing a State of a Sample Analyzer

An embodiment of the present disclosure relates to a monitoring method for managing the state of a sample analyzer. The description of each term in section 2 above is incorporated herein.

The monitoring method includes a step of generating output data for associating and displaying in time series a sample information region indicating information related to measurement data acquired by the sample analyzer from a sample for monitoring the state and an operational information region indicating information related to the operation of the sample analyzer. The monitoring method also includes a step of monitoring the output data. In monitoring, the sample information region and/or the operational information region is observed, and whether the quality control information acquired from the sample analyzer 2000 to be managed indicates accuracy failure is observed. For example, the quality control information acquired from the sample analyzer 2000 to be managed is compared with the reference range of the quality control item, and when the quality control information is within the reference range, it is determined that the accuracy is good. When the quality control information is outside the reference range, it can be determined that the accuracy is poor. This determination can be performed by the processing unit 710a of the generating apparatus 3000 or the processing unit of the server 4000. The reference range of the quality control information also may be included in the quality control data 4050. In addition, when it is determined that the accuracy is poor, a warning such as the sign B7 in FIG. 3, the sign C4 in FIG. 4, and the sign D5 in FIG. 5 may be displayed. The form of the warning is not limited.

The monitoring data generation system 7000 described in the above section 4 can be alternatively read as a monitoring system of the sample analyzer 2000. Therefore, the configuration of the monitoring system is similar to generation system 7000. The generating apparatus 3000 also can be alternatively read as a monitoring apparatus. Therefore, the configuration of the monitoring apparatus is the same as that of the generating apparatus 3000.

The description of each term in section 4 above is incorporated herein.

## Claims

1. An apparatus for generating monitoring data for managing a state of a sample analyzer, the apparatus comprising: a processing unit for generating output data to associate and display, in time series, a sample information region indicating information related to measurement data acquired by a sample analyzer from a sample for monitoring the state, and an operational information region indicating information related to an operation of the sample analyzer.

2. The apparatus according to claim 1, wherein
the sample is a standard sample and/or a sample collected from a subject.

3. The apparatus according to claim 1, wherein

the sample is a standard sample,
the information related to the measurement data is at least one type selected from among a group including measurement data of a positive control, a rise time of a turbidity in the positive control, measurement data of a negative control, measurement data of a calibrator for preparing a calibration curve, a slope of the calibration curve created based on the measurement data of the calibrator and external quality control information of said each data.

**4.** The apparatus according to any of claims 1 to 3, wherein
the information related to the operation of the sample analyzer is selected from a group including capacitance, quantitative count, reagent suction and discharge pressures, environmental temperature, reagent remainder amount, software version information, error code, error content, error occurrence date/time, operation monitor, and status.

**5.** The apparatus according to any one of claims 1 to 4, wherein

the sample is a sample collected from a subject; and
the processing unit further acquires measurement data of a sample from each of a plurality of sample analyzers, generates an index for evaluating a state of the sample analyzer to be managed from a plurality of acquired measurement data, and generates the output data for displaying the measurement data acquired from the sample analyzer to be managed in the sample information region so as to be comparable with the index.

**6.** The apparatus of any one of claims 1 to 5, wherein
the output data include data for associating and displaying, in time series format, the sample information region and the operational information region indicating information related to the operation of the sample analyzer at the time of acquiring the measurement data.

**7.** The apparatus according to any one of claims 1 to 6, wherein
the output data are data for displaying the sample information region and the operational information region in a single continuous region.

**8.** The apparatus according to claim 7, wherein
the output data are data for displaying the sample information region and the operational information region in the single continuous region so as to be arranged in a vertical direction.

**9.** The apparatus according to claim 7, wherein
the output data are data for displaying the sample information region and the operational information region so as to be arranged on the basis of a point of time when the measurement data are acquired.

**10.** The apparatus according to claim 8 or 9, wherein
the output data are data for displaying the sample information region above the operational information region.

**11.** The apparatus according to any of claims 7 to 10, wherein
the operational information region is a region for displaying a plurality of kinds of information selected from a group including capacitance, quantitative count, reagent suction and discharge pressures, environmental temperature, reagent remainder amount, software version information, error code, error content, error occurrence date/time, operation monitor, and status.

**12.** The apparatus according to any one of claims 1 to 4, wherein
the output data are data for displaying the sample information region and the operational information region partially overlapped within one screen.

**13.** The apparatus according to any one of claims 1 to 4, wherein
the data are data for displaying the sample information region and the operational information region in respectively different windows, and when one window is specified, another window is also displayed.

**14.** The apparatus according to any one of claims 1 to 4, wherein
the output data are data for displaying the sample information region and the operational information region in respectively different windows, and emphasizing another window when one window is designated.

**15.** A method of generating monitoring data for managing a state of a sample analyzer, comprising:
generating output data for associating and displaying, in time series, a sample information region indicating information related to measurement data acquired by a sample analyzer from a sample for monitoring the state, and an operational information region indicating information related to an operation of the sample analyzer..

FIG. 1

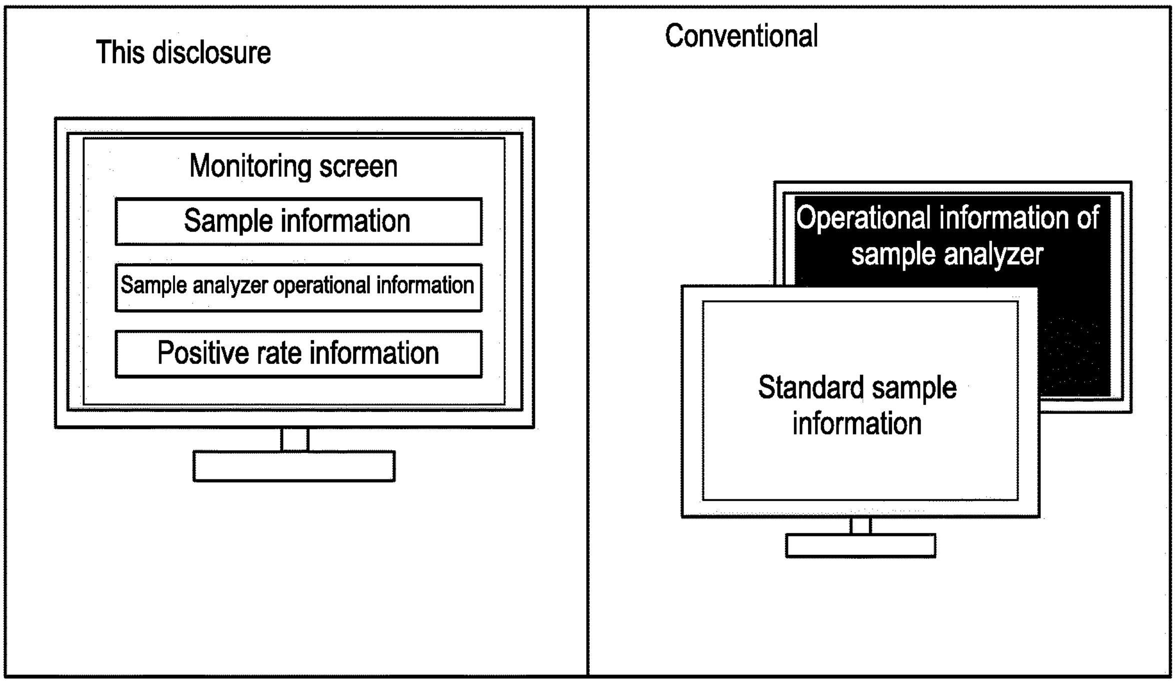
This disclosure
Monitoring screen
Sample information
Sample analyzer operational information
Positive rate information
Conventional
Operational information of sample analyzer
Standard sample information

FIG. 2

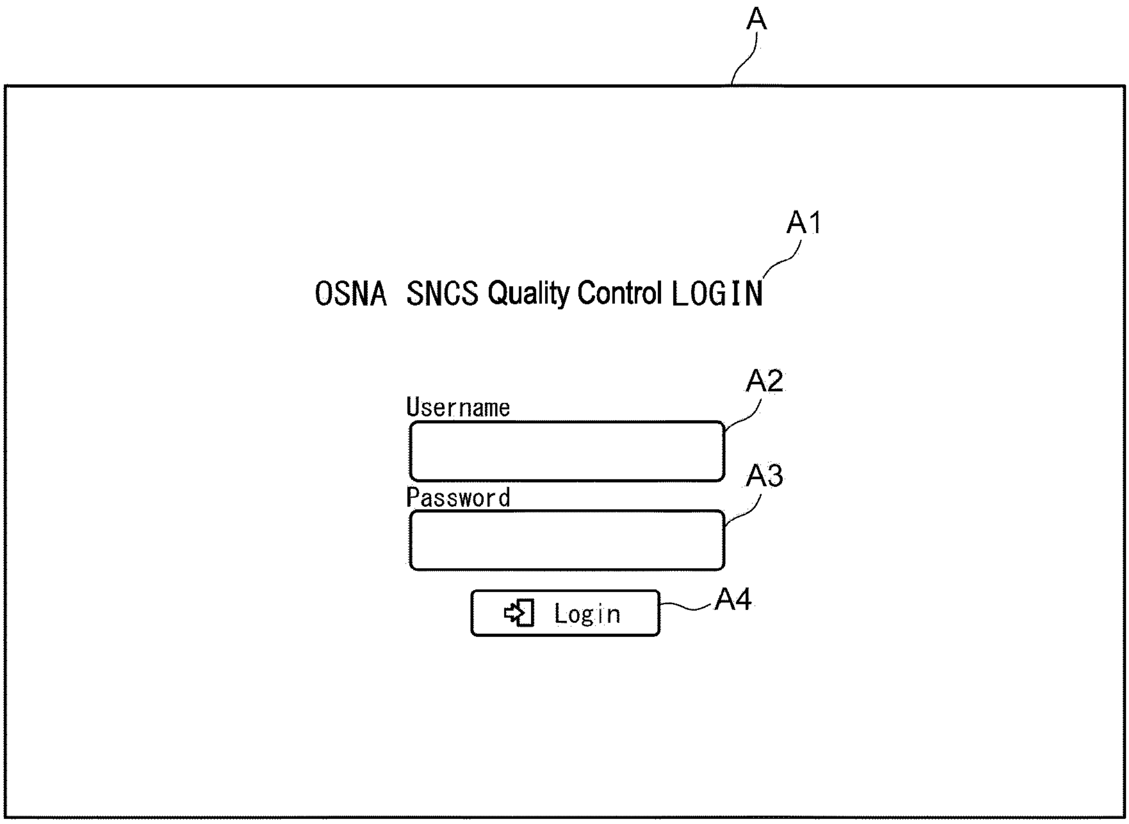
A
A1
OSNA SNCS Quality Control LOGIN
A2
Username
A3
Password
Login
A4

FIG. 3

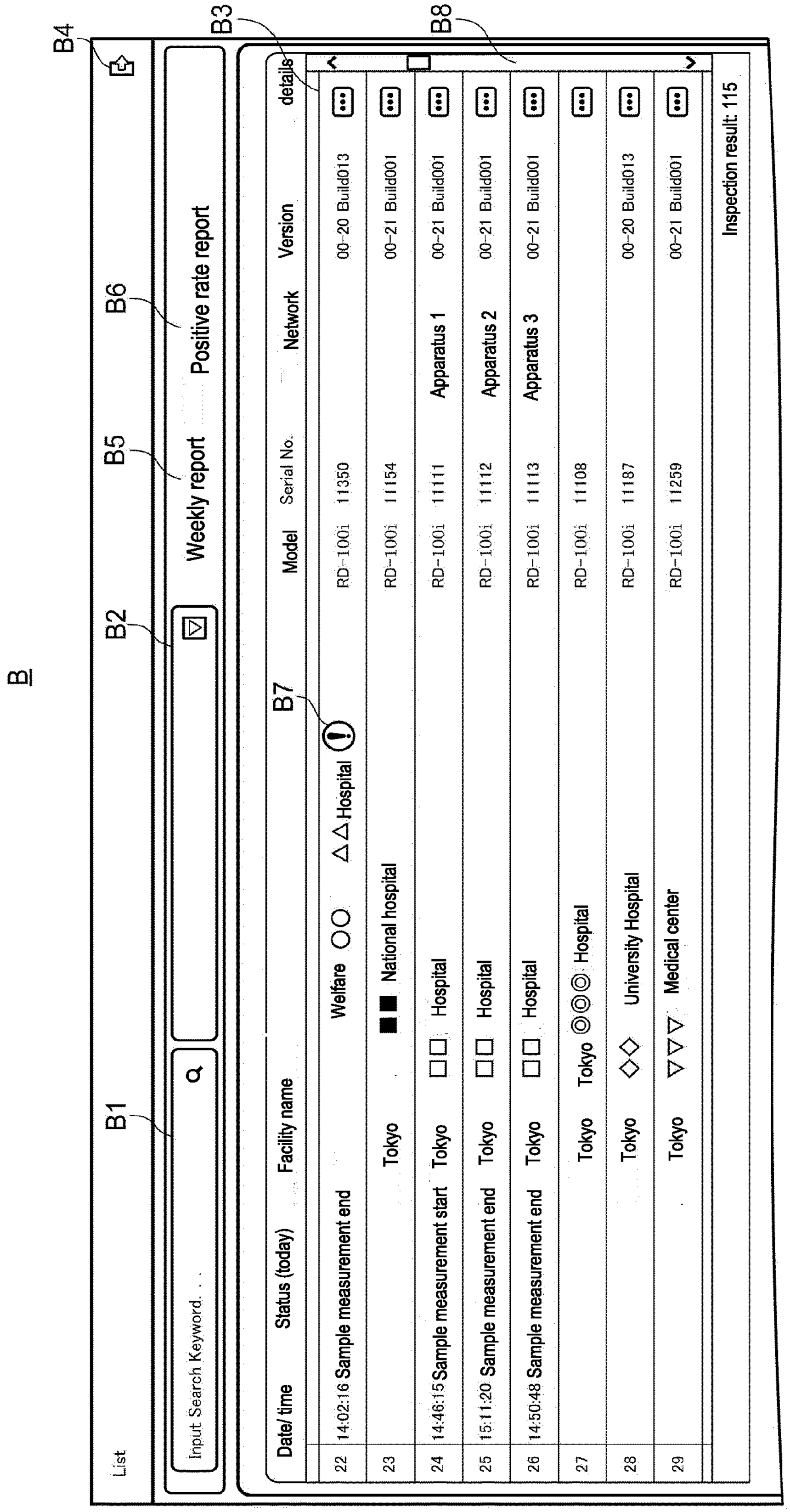
B
B1
B2
B3
B4
B5
B6
B7
B8
List
Input Search Keyword. . .
Weekly report
Positive rate report
Date/ time
Status (today)
Facility name
Model
Serial No.
Network
Version
details
22
14:02:16
Sample measurement end
Welfare
Hospital
RD-100i
11350
00-20 Build013
23
Tokyo
National hospital
RD-100i
11154
00-21 Build001
24
14:46:15
Sample measurement start
Tokyo
Hospital
RD-100i
11111
Apparatus 1
00-21 Build001
25
15:11:20
Sample measurement end
Tokyo
Hospital
RD-100i
11112
Apparatus 2
00-21 Build001
26
14:50:48
Sample measurement end
Tokyo
Hospital
RD-100i
11113
Apparatus 3
00-21 Build001
27
Tokyo
Hospital
RD-100i
11108
28
Tokyo
University Hospital
RD-100i
11187
00-20 Build013
29
Tokyo
Medical center
RD-100i
11259
00-21 Build001
Inspection result: 115

FIG. 4

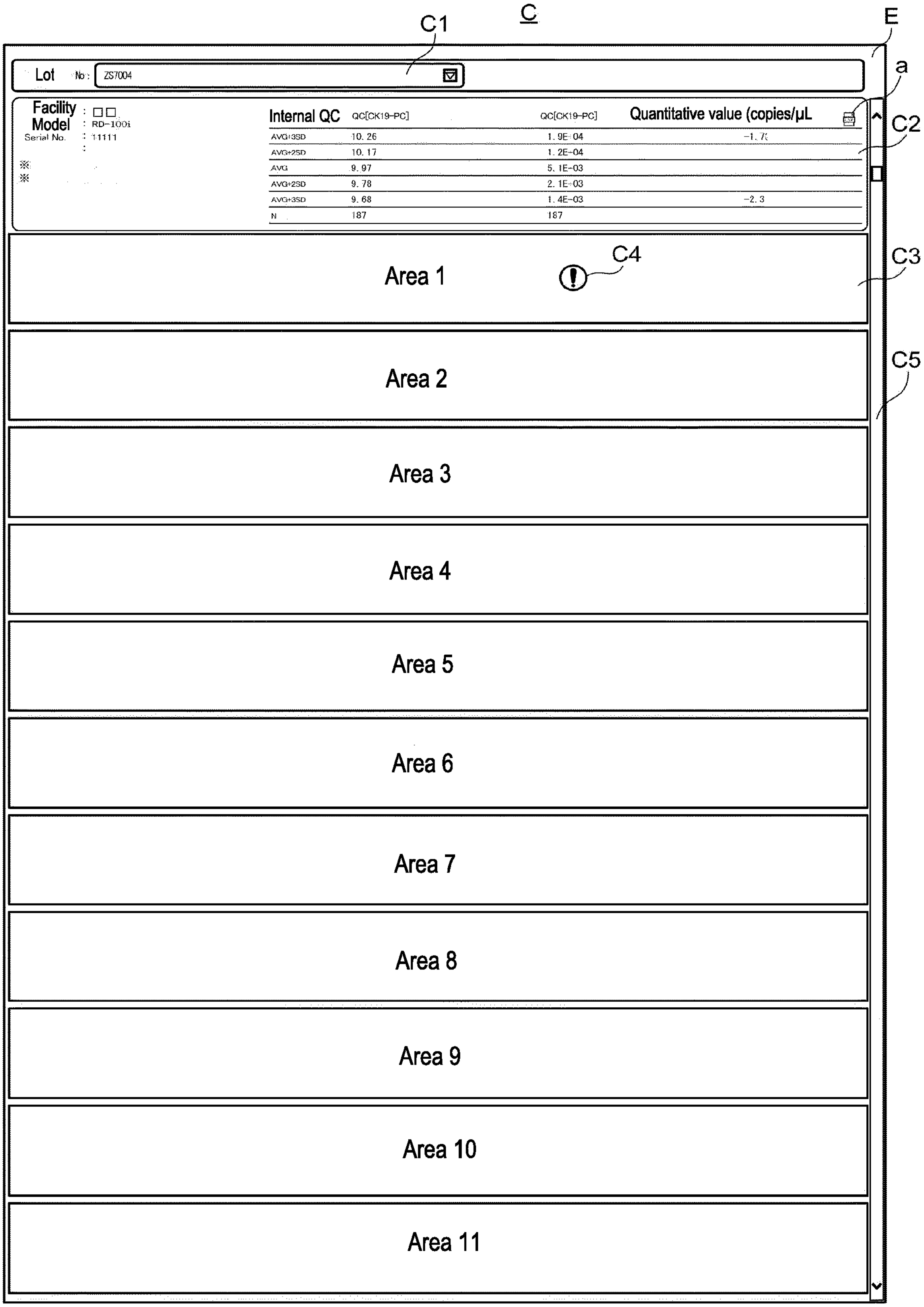
C1
C
E
a
C2
C3
C4
C5
Lot No : ZS7004
Facility : □□
Model : RD-100i
Serial No. : 11111
Internal QC
QC[CK19-PC]
QC[CK19-PC]
Quantitative value (copies/μL
AVG+3SD 10. 26 1. 9E-04 -1. 7
AVG+2SD 10. 17 1. 2E-04
AVG 9. 97 5. 1E-03
AVG+2SD 9. 78 2. 1E-03
AVG+3SD 9. 68 1. 4E-03 -2. 3
N 187 187
Area 1
Area 2
Area 3
Area 4
Area 5
Area 6
Area 7
Area 8
Area 9
Area 10
Area 11

FIG. 5

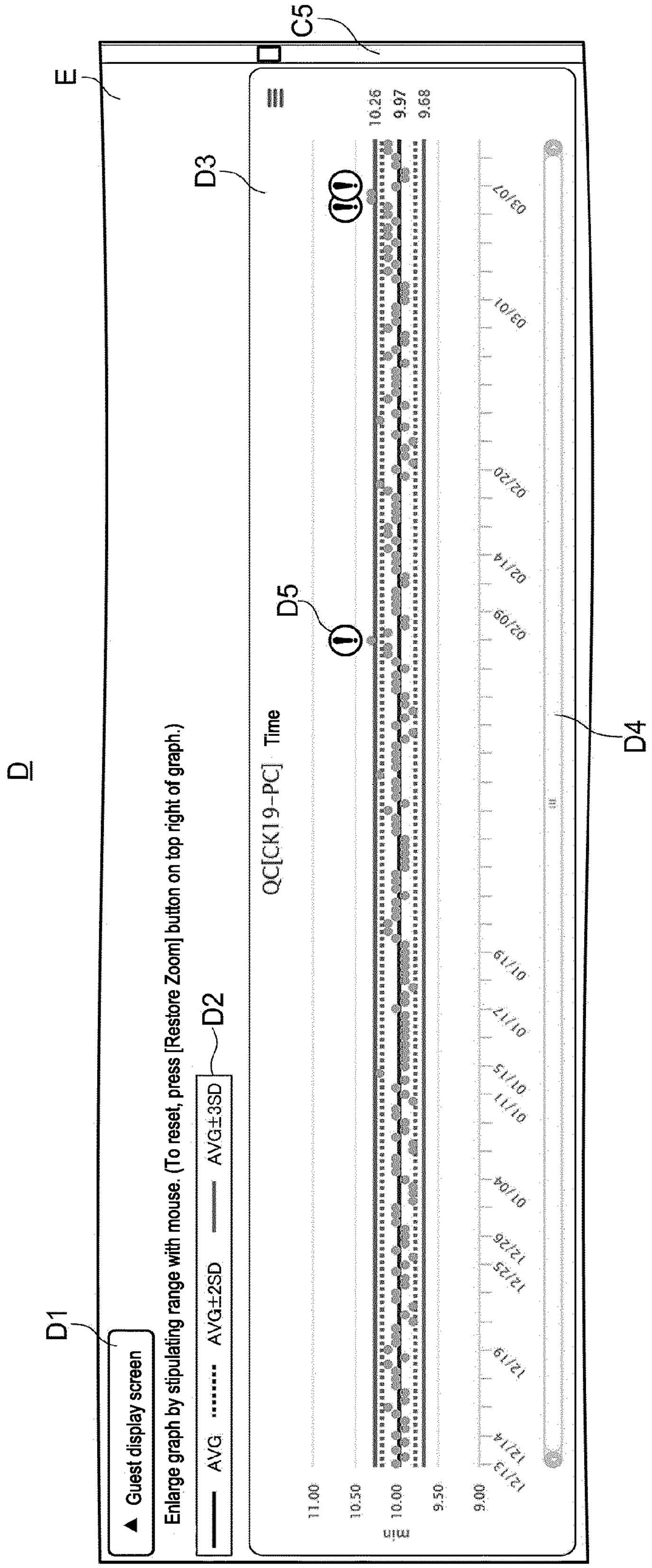
D
E
C5
D1
D2
D3
D4
D5
▲ Guest display screen
Enlarge graph by stipulating range with mouse. (To reset, press [Restore Zoom] button on top right of graph.)
AVG
AVG±2SD
AVG±3SD
QC[CK19-PC] Time
min
11.00
10.50
10.00
9.50
9.00
10.26
9.97
9.68
12/13
12/14
12/19
12/25
12/26
01/04
01/11
01/15
01/17
01/19
02/09
02/14
02/20
03/01
03/07

FIG. 6

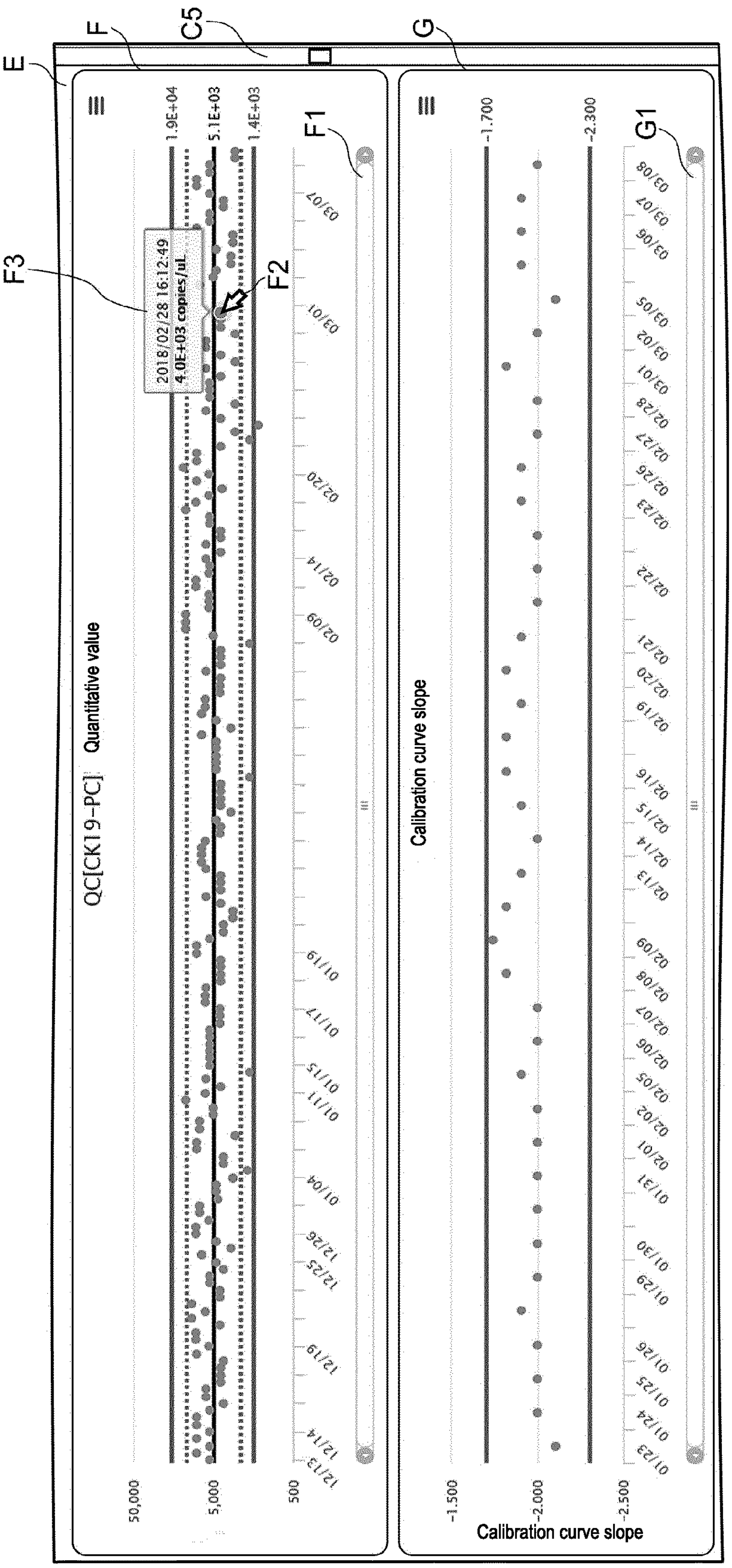
E
F
C5
G
F1
F2
F3
G1
QC[CK19-PC]
Quantitative value
Calibration curve slope
2018/02/28 16:12:49
4.0E+03 copies/uL

FIG. 7

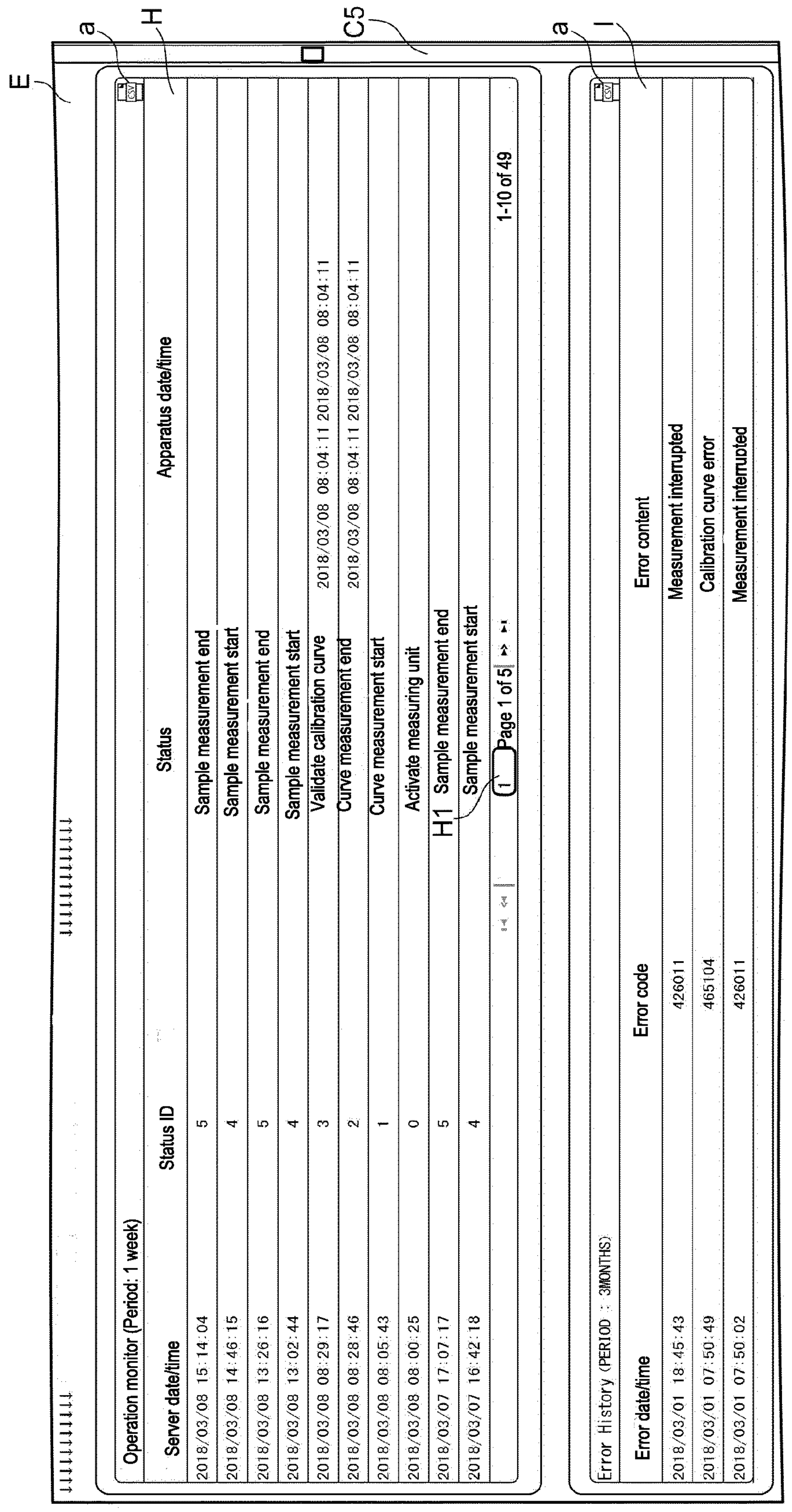
E
a
H
C5
a
I
H1
Operation monitor (Period: 1 week)
Server date/time
Status ID
Status
Apparatus date/time
2018/03/08 15:14:04
5
Sample measurement end
2018/03/08 14:46:15
4
Sample measurement start
2018/03/08 13:26:16
5
Sample measurement end
2018/03/08 13:02:44
4
Sample measurement start
2018/03/08 08:29:17
3
Validate calibration curve
2018/03/08 08:04:11 2018/03/08 08:04:11
2018/03/08 08:28:46
2
Curve measurement end
2018/03/08 08:04:11 2018/03/08 08:04:11
2018/03/08 08:05:43
1
Curve measurement start
2018/03/08 08:00:25
0
Activate measuring unit
2018/03/07 17:07:17
5
Sample measurement end
2018/03/07 16:42:18
4
Sample measurement start
1
Page 1 of 5
1-10 of 49
Error History (PERIOD : 3MONTHS)
Error date/time
Error code
Error content
2018/03/01 18:45:43
426011
Measurement interrupted
2018/03/01 07:50:49
465104
Calibration curve error
2018/03/01 07:50:02
426011
Measurement interrupted

FIG. 8

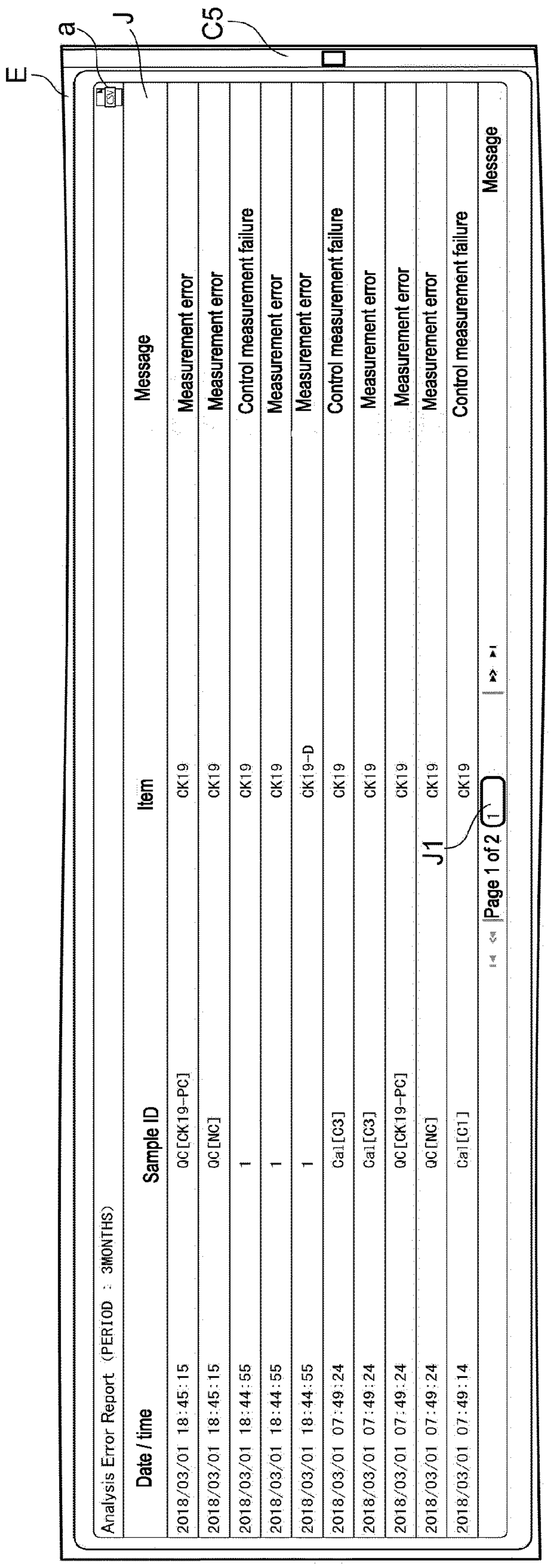
E
a
J
C5
J1
Analysis Error Report (PERIOD : 3MONTHS)
Date / time
Sample ID
Item
Message
2018/03/01 18:45:15 QC[CK19-PC] CK19 Measurement error
2018/03/01 18:45:15 QC[NC] CK19 Measurement error
2018/03/01 18:44:55 1 CK19 Control measurement failure
2018/03/01 18:44:55 1 CK19 Measurement error
2018/03/01 18:44:55 1 CK19-D Measurement error
2018/03/01 07:49:24 Cal[C3] CK19 Control measurement failure
2018/03/01 07:49:24 Cal[C3] CK19 Measurement error
2018/03/01 07:49:24 QC[CK19-PC] CK19 Measurement error
2018/03/01 07:49:24 QC[NC] CK19 Measurement error
2018/03/01 07:49:14 Cal[C1] CK19 Control measurement failure
Page 1 of 2
1
Message

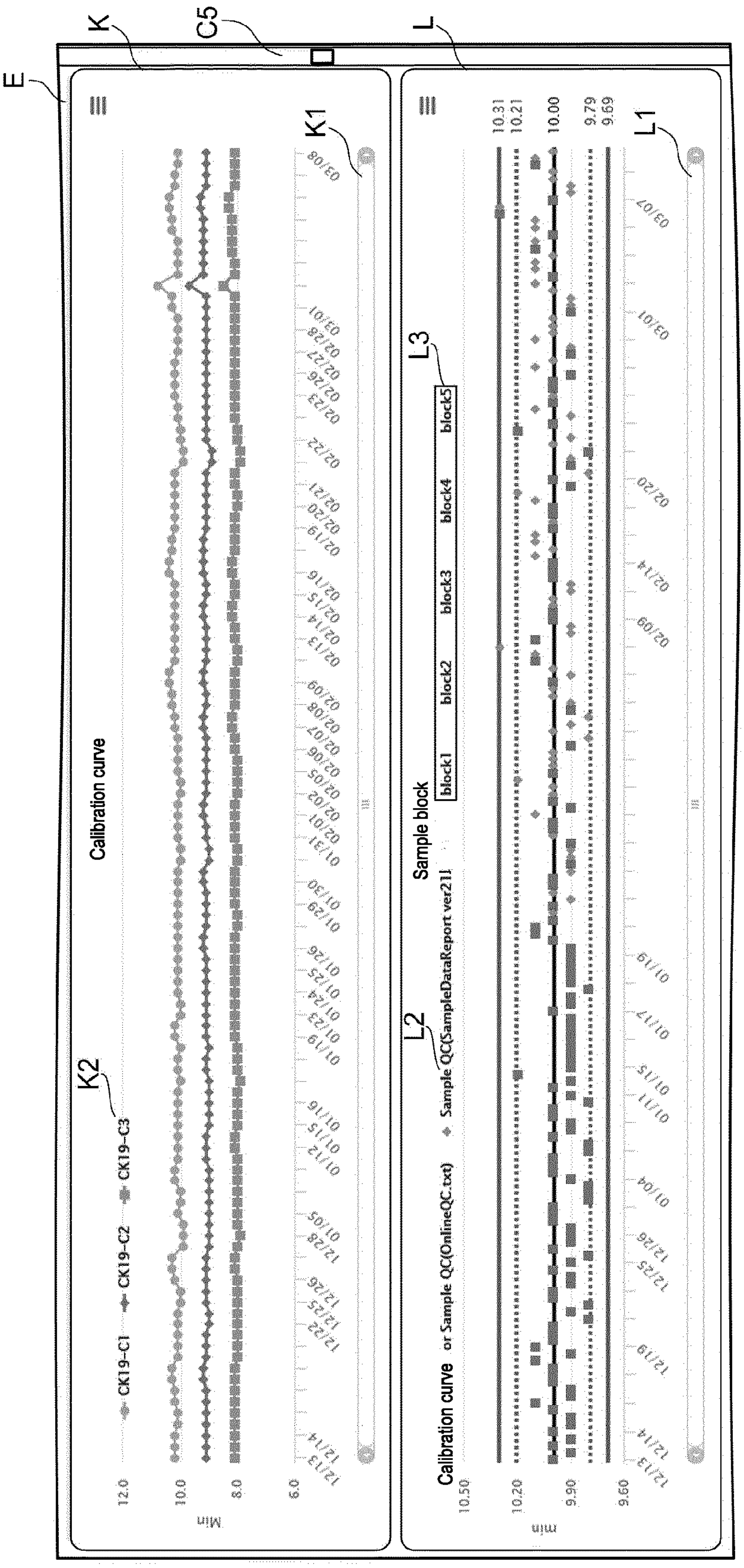
E
K
C5
L
K1
K2
L1
L2
L3
Calibration curve
CK19-C1
CK19-C2
CK19-C3
Min
Sample block
block1
block2
block3
block4
block5
Calibration curve or Sample QC(OnlineQC.txt)
Sample QC(SampleDataReport ver21)
min

FIG. 9

FIG. 10

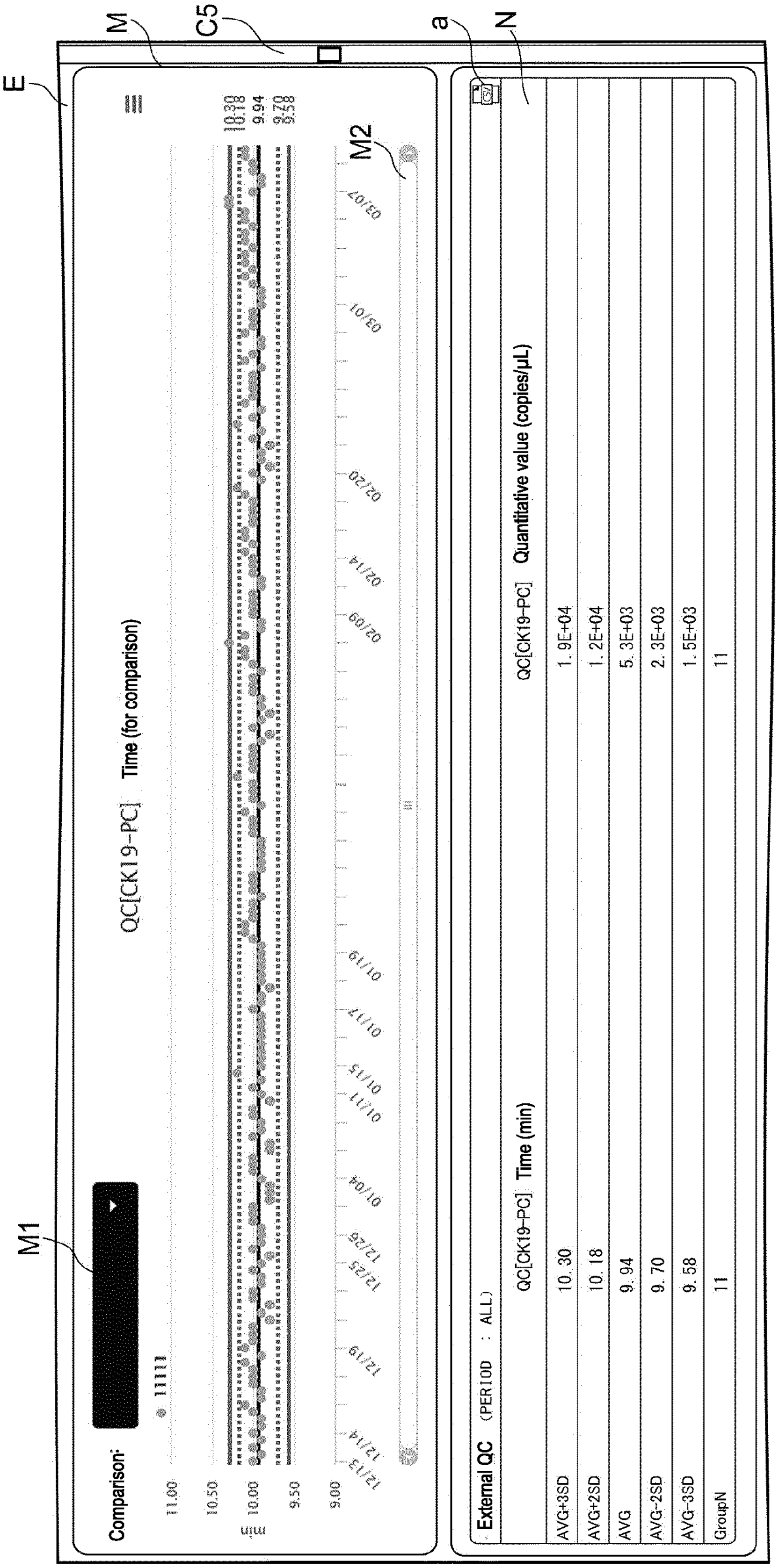
E
M
C5
a
N
M1
M2
Comparison:
11111
QC[CK19-PC]
Time (for comparison)
11.00
10.50
10.00
9.50
9.00
min
10.30
10.18
9.94
9.70
9.58
12/13
12/14
12/19
12/25
12/26
01/04
01/11
01/15
01/17
01/19
02/09
02/14
02/20
03/01
03/07
External QC (PERIOD : ALL)
QC[CK19-PC] Time (min)
QC[CK19-PC] Quantitative value (copies/µL)
AVG+3SD 10.30 1.9E+04
AVG+2SD 10.18 1.2E+04
AVG 9.94 5.3E+03
AVG-2SD 9.70 2.3E+03
AVG-3SD 9.58 1.5E+03
GroupN 11 11

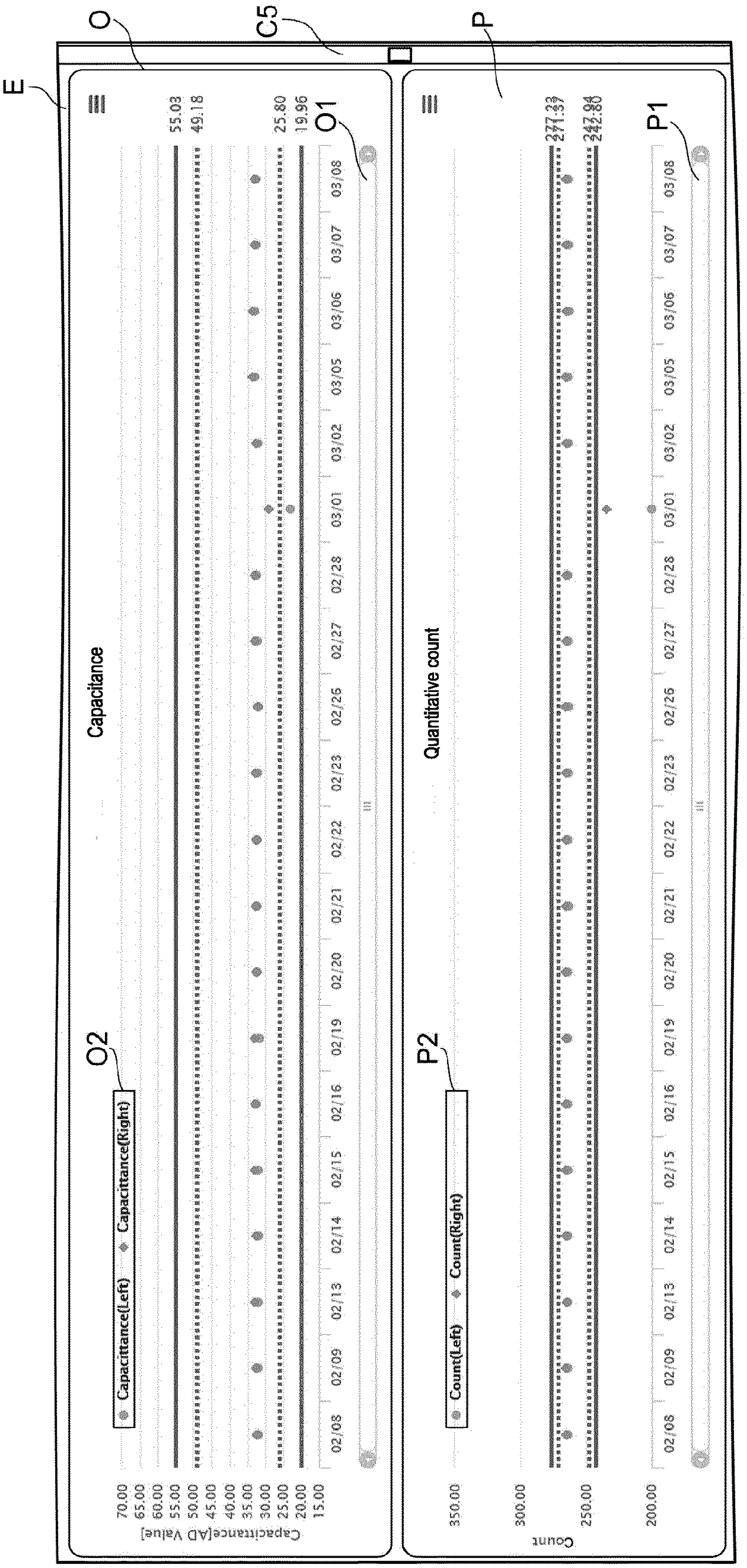
E
O
C5
P
O1
O2
P1
P2
Capacitance
Capacitance(Left)
Capacitance(Right)
Capacitance[AD Value]
55.03
49.18
25.80
19.96
70.00
65.00
60.00
55.00
50.00
45.00
40.00
35.00
30.00
25.00
20.00
15.00
Quantitative count
Count(Left)
Count(Right)
Count
350.00
300.00
250.00
200.00
02/08
02/09
02/13
02/14
02/15
02/16
02/19
02/20
02/21
02/22
02/23
02/26
02/27
02/28
03/01
03/02
03/05
03/06
03/07
03/08

FIG. 11

FIG. 12

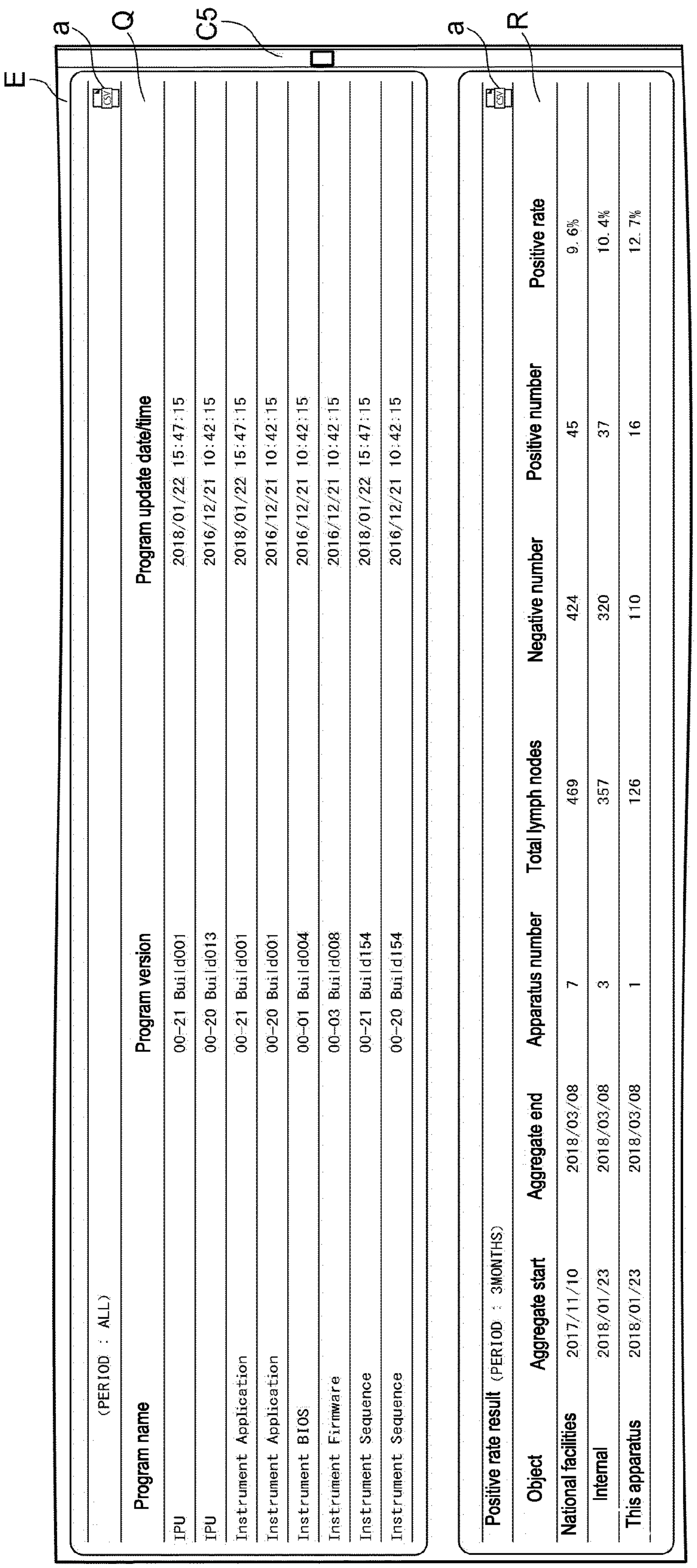
E
a
Q
C5
a
R
(PERIOD : ALL)
Program name
Program version
Program update date/time
IPU 00-21 Build001 2018/01/22 15:47:15
IPU 00-20 Build013 2016/12/21 10:42:15
Instrument Application 00-21 Build001 2018/01/22 15:47:15
Instrument Application 00-20 Build001 2016/12/21 10:42:15
Instrument BIOS 00-01 Build004 2016/12/21 10:42:15
Instrument Firmware 00-03 Build008 2016/12/21 10:42:15
Instrument Sequence 00-21 Build154 2018/01/22 15:47:15
Instrument Sequence 00-20 Build154 2016/12/21 10:42:15
Positive rate result (PERIOD : 3MONTHS)
Object
Aggregate start
Aggregate end
Apparatus number
Total lymph nodes
Negative number
Positive number
Positive rate
National facilities 2017/11/10 2018/03/08 7 469 424 45 9.6%
Internal 2018/01/23 2018/03/08 3 357 320 37 10.4%
This apparatus 2018/01/23 2018/03/08 1 126 110 16 12.7%

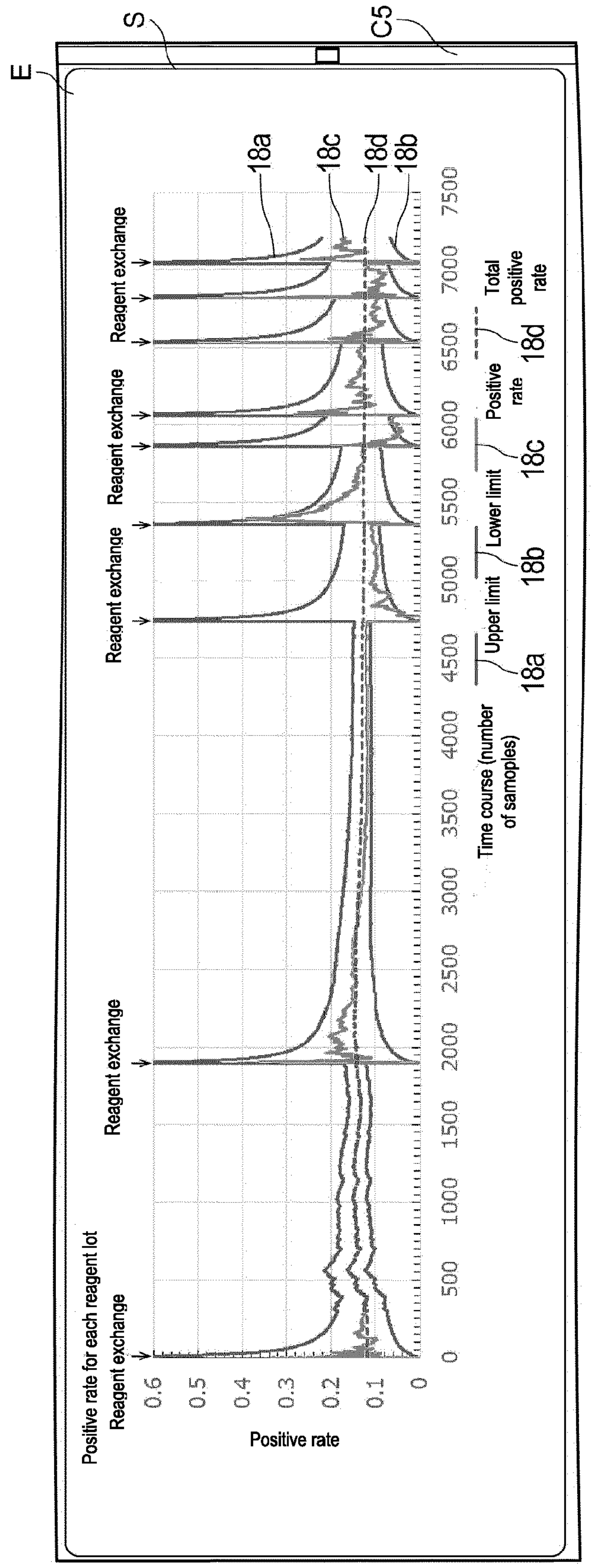
E
S
C5
Positive rate for each reagent lot
Reagent exchange
Reagent exchange
Reagent exchange
Reagent exchange
Reagent exchange
Reagent exchange
18a
18c
18d
18b
0.6
0.5
0.4
0.3
0.2
0.1
0
Positive rate
0
500
1000
1500
2000
2500
3000
3500
4000
4500
5000
5500
6000
6500
7000
7500
Time course (number of samoples)
18a
Upper limit
18b
Lower limit
18c
Positive rate
18d
Total positive rate

FIG. 13

FIG. 14

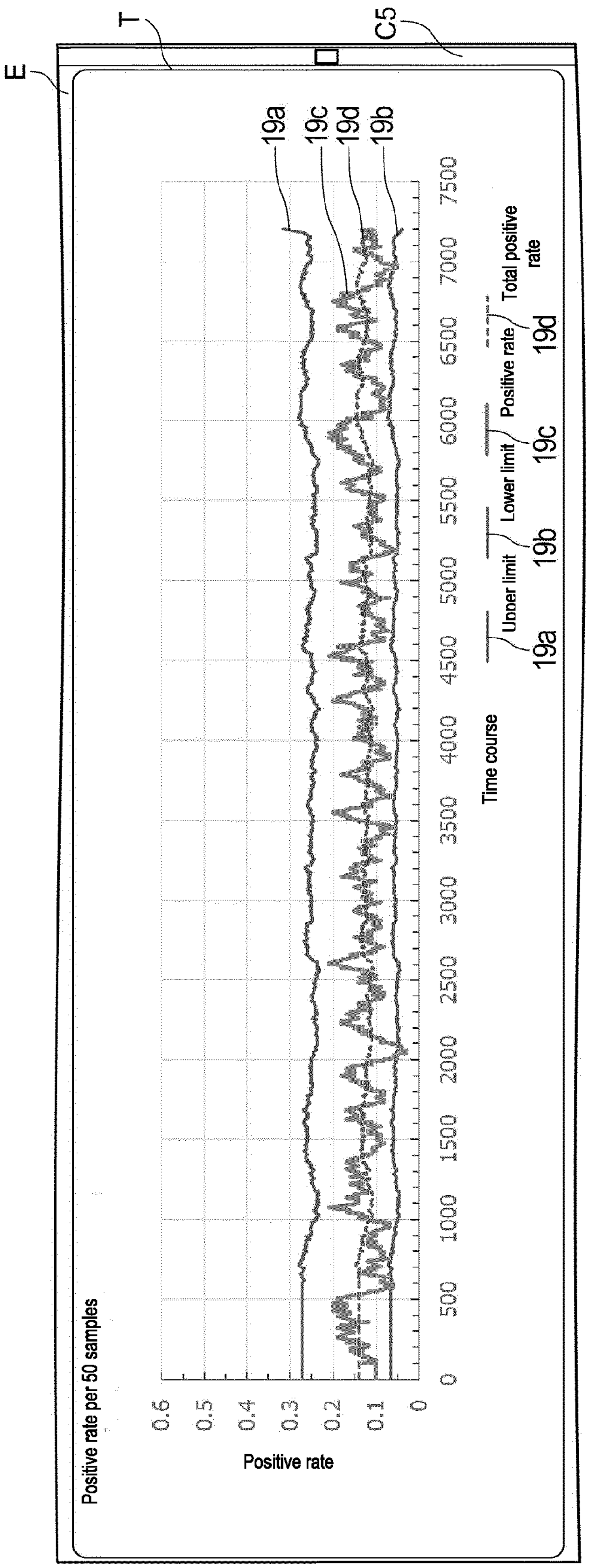
E
T
C5
19a
19c
19d
19b
Positive rate per 50 samples
Positive rate
0.6
0.5
0.4
0.3
0.2
0.1
0
0
500
1000
1500
2000
2500
3000
3500
4000
4500
5000
5500
6000
6500
7000
7500
Time course
Upper limit
Lower limit
Positive rate
Total positive rate

FIG. 15

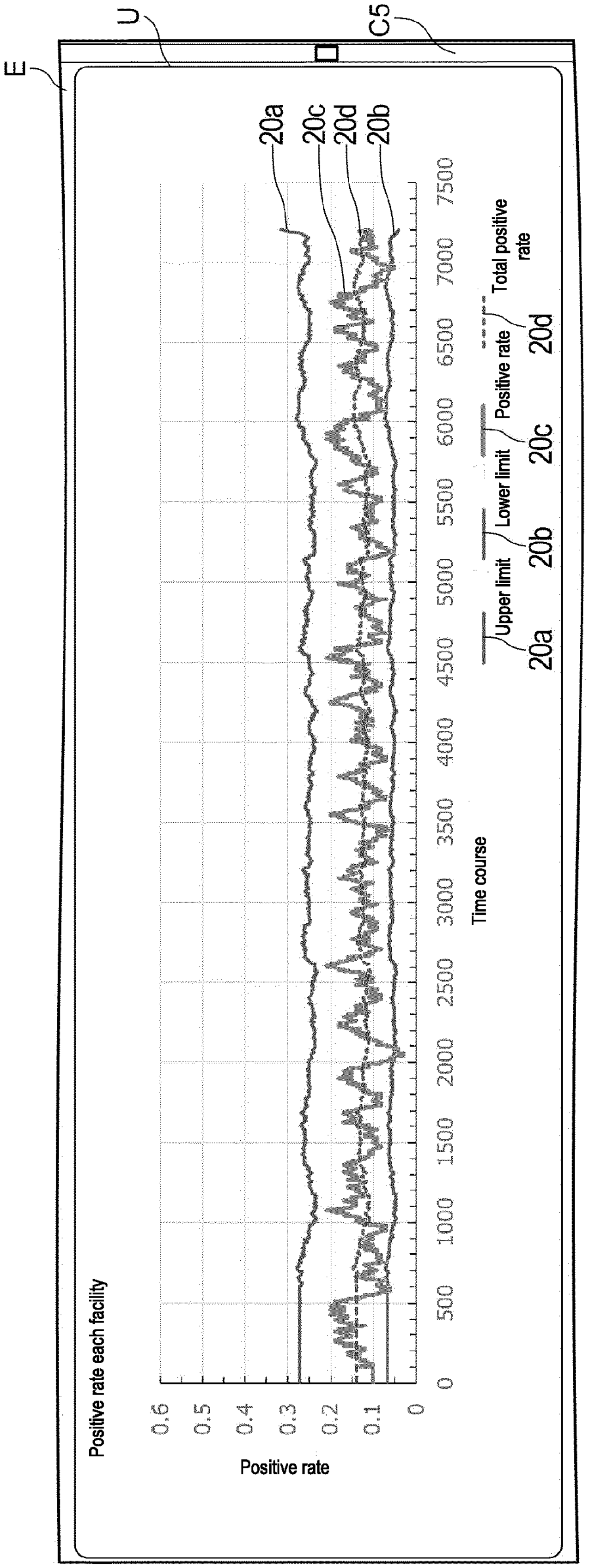

E
U
C5
Positive rate each facility
Positive rate
Time course
Upper limit
Lower limit
Positive rate
Total positive rate
20a
20b
20c
20d

FIG. 16

| Pattern | Calibrator 1 | Calibrator 2 | Calibrator 3 | Positive control | Calibration curve slope | Capacitance | Reagent suction/discharge pressure | Estimated cause of failure |
|---|---|---|---|---|---|---|---|---|
| 1 | ○ | ○ | ○ | ○ | ○ | ○ | ○ | No failure |
| 2 | × | × | × | × | × | × | ○ | Pipette tip mounting error or reagent failure |
| 3 | ○ | ○ | × | ○ | × | ○ | ○ | Calibrator failure |
| 4 | ○ | ○ | ○ | × | ○ | ○ | ○ | Control failure |
| | | | | | | | | |

FIG. 17

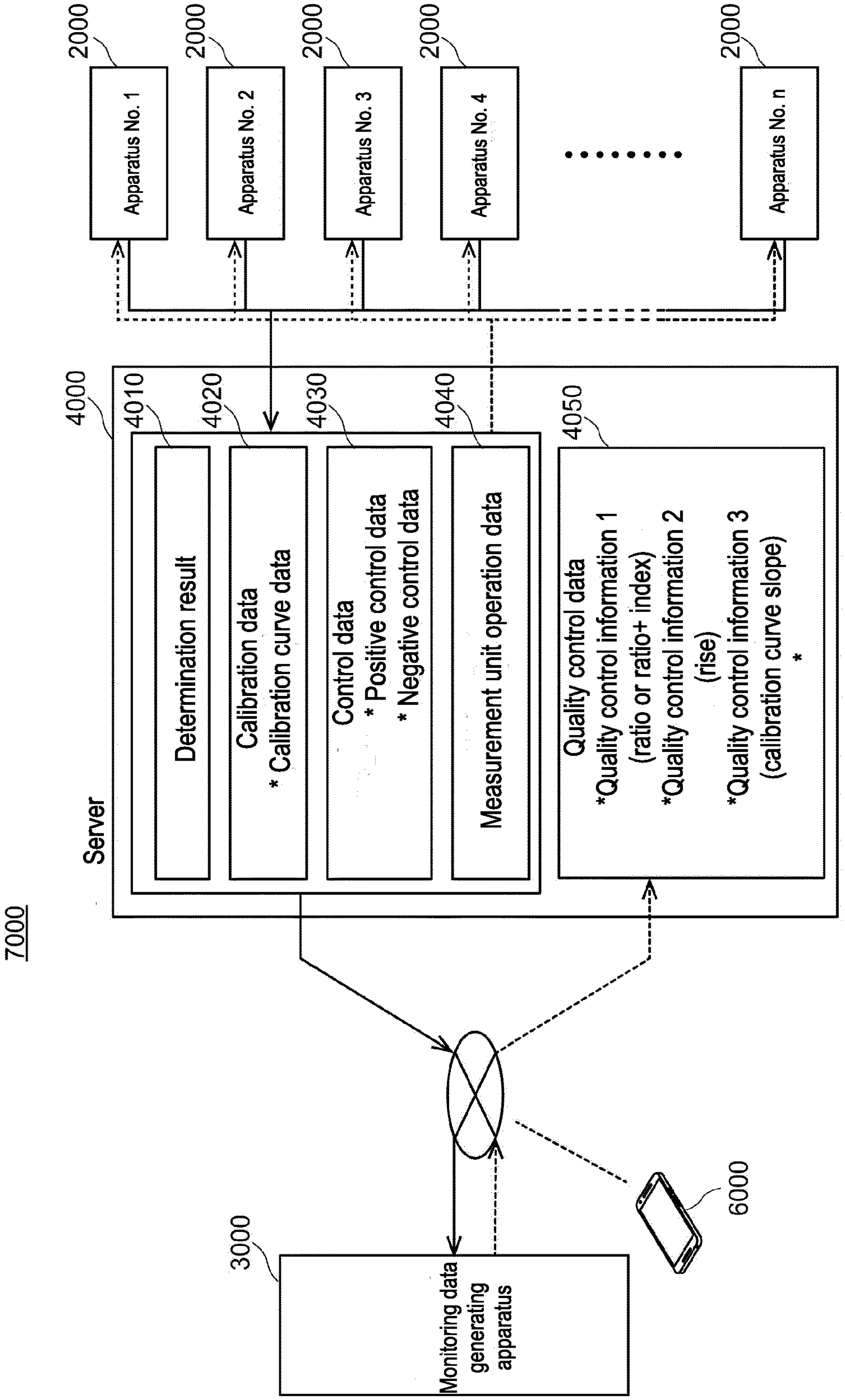
7000
Server
4000
4010
Determination result
4020
Calibration data
* Calibration curve data
4030
Control data
* Positive control data
* Negative control data
4040
Measurement unit operation data
4050
Quality control data
*Quality control information 1
(ratio or ratio+ index)
*Quality control information 2
(rise)
*Quality control information 3
(calibration curve slope)
*
2000
Apparatus No. 1
Apparatus No. 2
Apparatus No. 3
Apparatus No. 4
Apparatus No. n
3000
Monitoring data generating apparatus
6000

FIG. 18

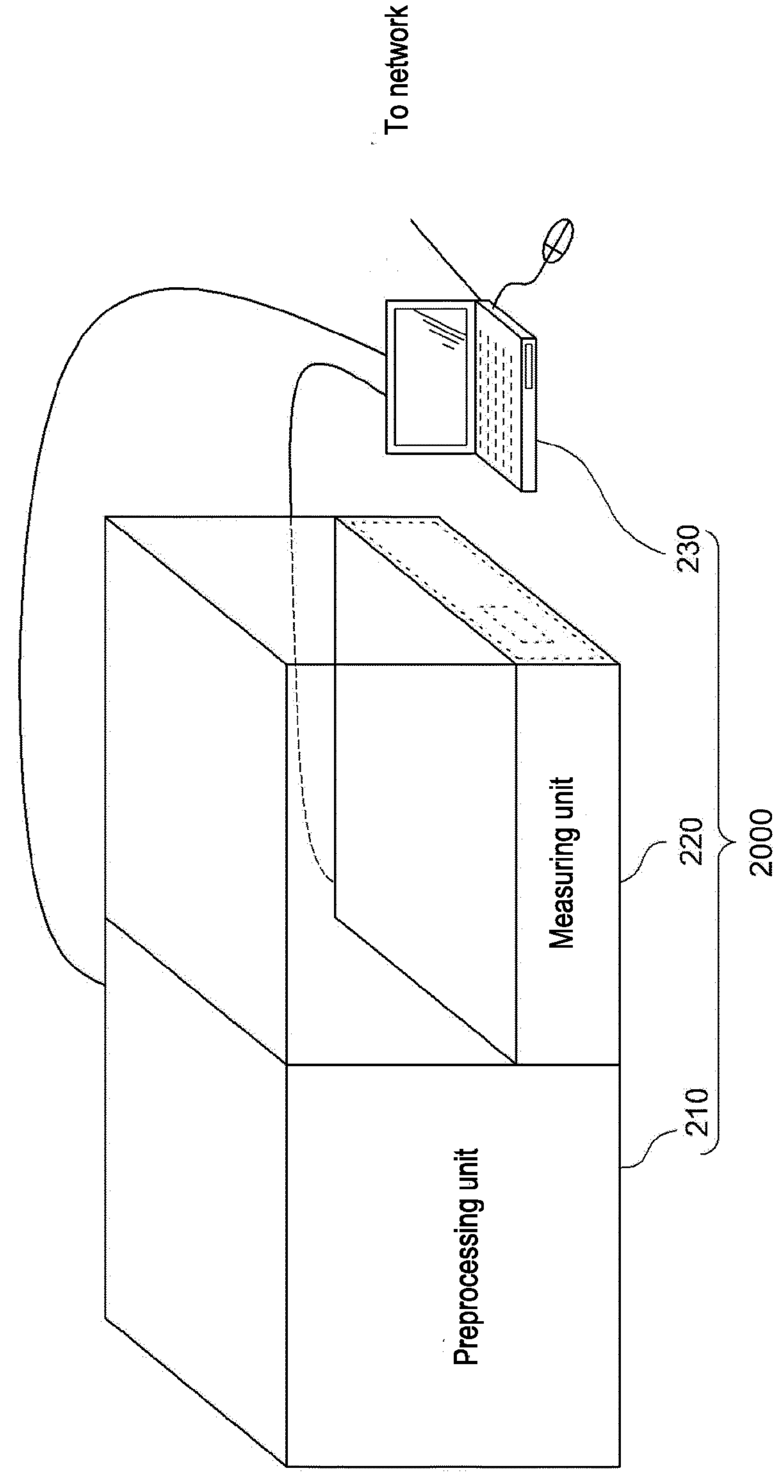
To network
230
Measuring unit
220
2000
Preprocessing unit
210

FIG. 19

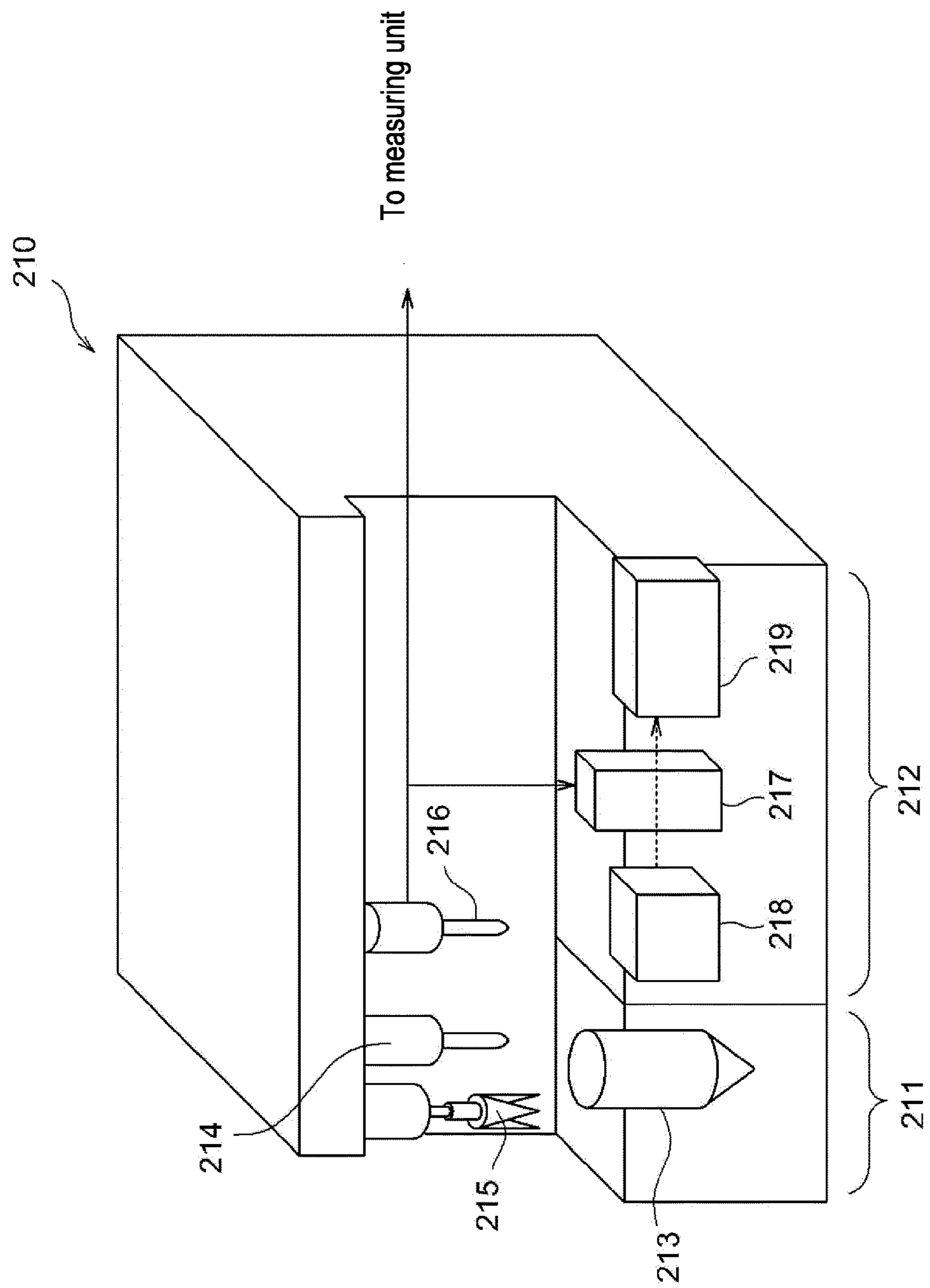

FIG. 20

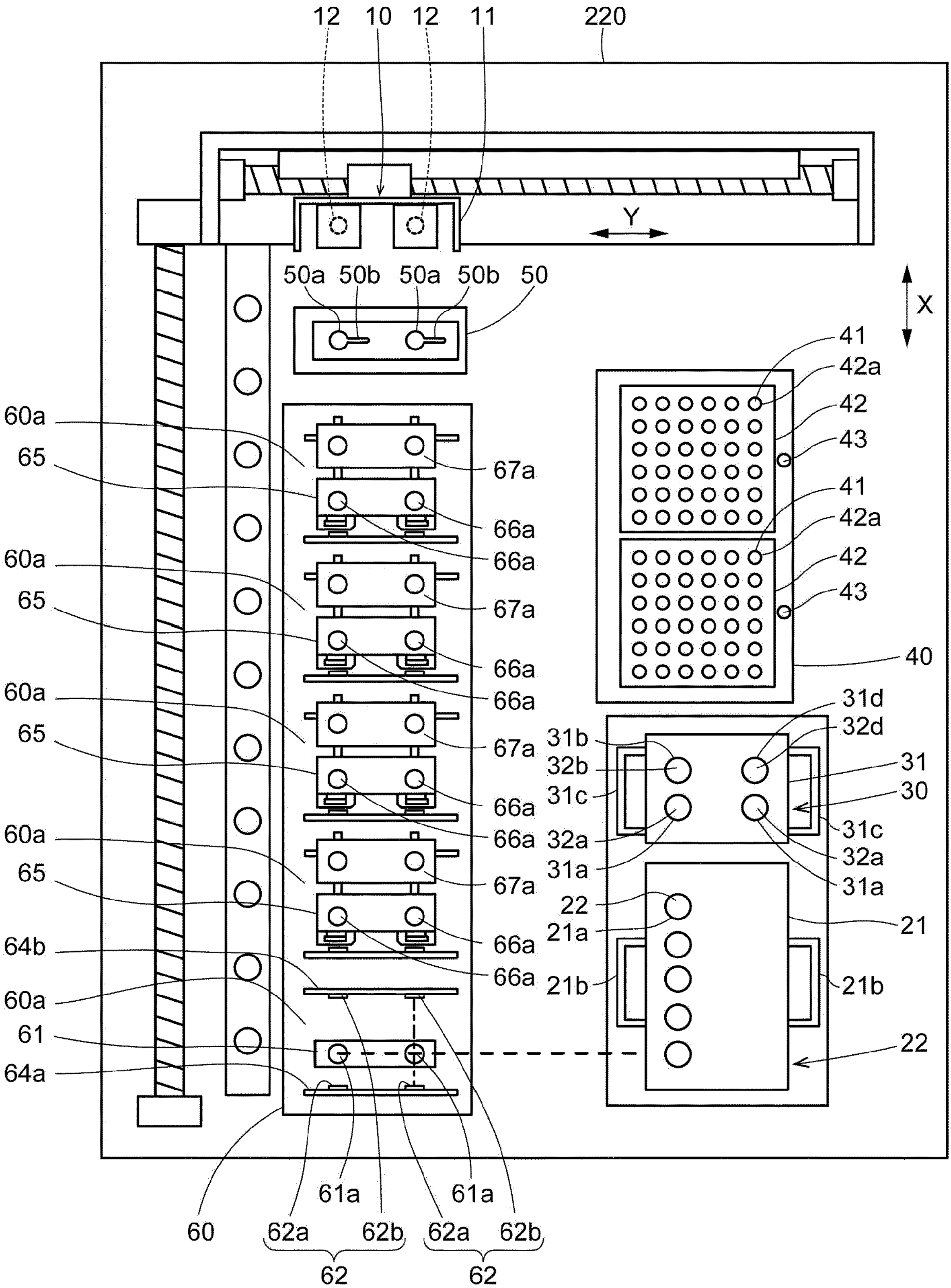
12
10
12
11
220
Y
X
50a
50b
50a
50b
50
41
42a
42
43
41
42a
42
43
40
60a
65
67a
66a
66a
60a
65
67a
66a
66a
60a
65
67a
66a
66a
60a
65
67a
66a
66a
64b
60a
61
64a
31d
32d
31b
32b
31c
31
30
32a
31a
31c
32a
31a
22
21a
21
21b
21b
22
60
61a
61a
62a
62b
62a
62b
62
62

FIG. 21

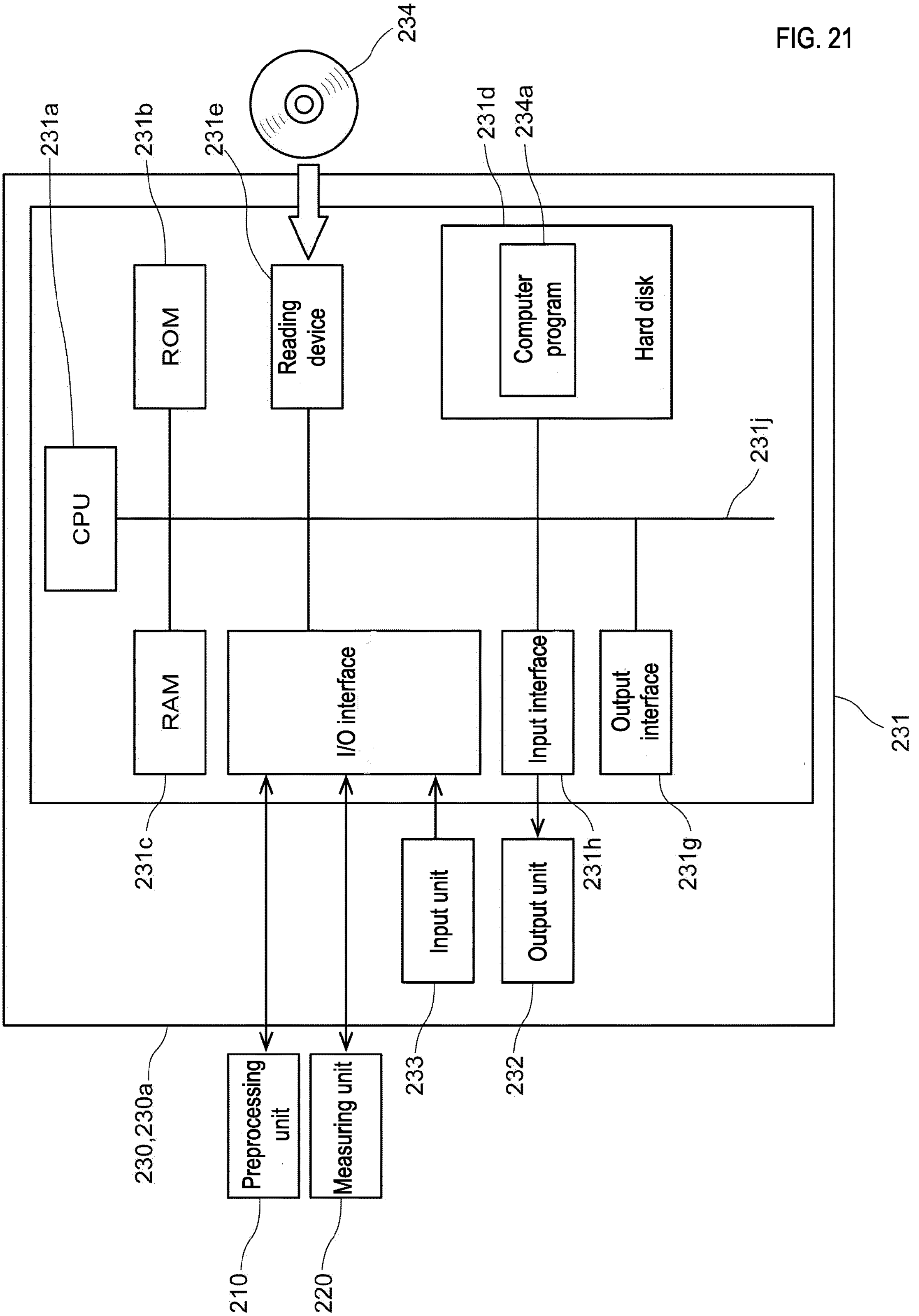

234
231a
231b
231e
231d
234a
ROM
Reading device
Computer program
Hard disk
CPU
231j
RAM
I/O interface
Input interface
Output interface
231
231c
231h
231g
Input unit
Output unit
233
232
230,230a
Preprocessing unit
Measuring unit
210
220

FIG. 22

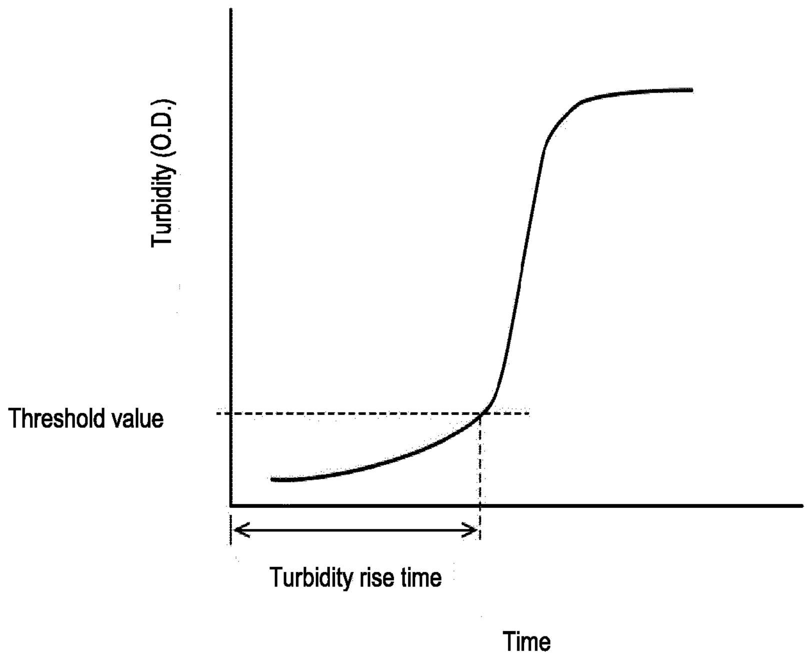

FIG. 23

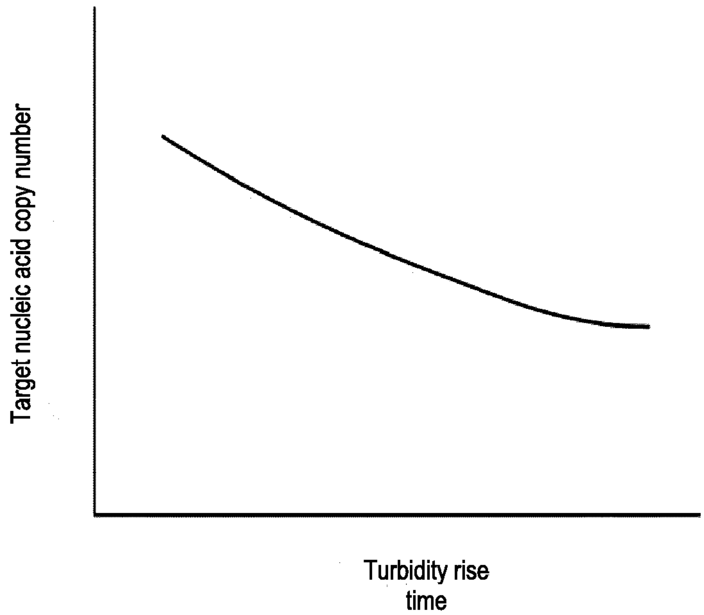

FIG. 24

4100

| Reception No. (F1) | Receive date (F2) | Receive time (F3) | Facility code (F4) | Apparatus ID (F5) | Operation state error (F6) | Technician (F7) | Processing department (F8) | Reagent lot (F9) | Positive control data (F10) | | Negative control data (F11) | | Calibrator 1 (F12) | | Calibrator 2 (F13) | | Calibrator 3 (F14) | | Calibration curve slope (F15) |
|---|---|---|---|---|---|---|---|---|---|---|---|---|---|---|---|---|---|---|---|
| | | | | | | | | | Copy number | Rise time | Copy number | Rise time | Copy number | Rise time | Copy number | Rise time | Copy number | Rise time | |
| 2263078 | 3/20 | 9:05 | H20 | H0003 | E02 | Taro | Manage-ment | A01 | 500 | 11 | 0 | — | 450 | 13 | 350 | 15 | 200 | 17 | -0. 1 |
| 2263079 | 3/20 | 9:06 | R10 | R0001 | S2 | Hanako | Standby | A01 | 510 | 10. 5 | 0 | — | 450 | 13 | 350 | 15 | 200 | 17 | -0. 12 |
| 2263080 | 3/20 | 9:07 | R10 | R0001 | S1 | Hanako | Standby | A02 | 500 | 11 | 0 | — | 460 | 12. 5 | 340 | 16 | 199 | 18 | -0. 12 |
| | | | | | | | | | | | | | | | | | | | |

FIG. 25

4010DB

| Reception number (F21) | Receive date (F22) | Receive time (F23) | Facility code (F24) | Apparatus ID (F25) | Sample ID (F26) | Test item CK19 (F27) |
|---|---|---|---|---|---|---|
| 2263078 | 3/20 | 9:05 | H20 | H0003 | 1 | Positive |
| 2263079 | 3/20 | 9:06 | R10 | R0001 | 2 | Negative |
| 2263080 | 3/20 | 9:07 | R10 | R0001 | 3 | Positive |
| 2263081 | 3/20 | 9:08 | H20 | H003 | 4 | Negative |
| 2263082 | 3/20 | 9:09 | H20 | H003 | 5 | Negative |
| | | | | | | |

FIG. 26

4040

| Reception number (F31) | Receive date (F32) | Receive time (F33) | Facility code (F34) | Apparatus ID (F35) | Capacitance (F36) | Quantitative count (F37) | Reagent suction / discharge pressure (F38) | Reagent remaining (F39) | Reagent remaining (F40) |
|---|---|---|---|---|---|---|---|---|---|
| 2263078 | 3/20 | 9:05 | H20 | H0003 | ... | ... | ... | ... | ... |
| 2263079 | 3/20 | 9:06 | R10 | R0001 | ... | ... | ... | ... | ... |
| 2263080 | 3/20 | 9:07 | R10 | R0001 | ... | ... | ... | ... | ... |
| | | | | | | | | | |

FIG. 27

4050DB

F41 F42 F43 F44 F45 F46

| Reception number | Receive date | Receive time | Facility code | Apparatus ID | Test item CK19 |
|---|---|---|---|---|---|
| | | | | | Ratio |
| 2263078 | 3/20 | 9:05 | H20 | H0003 | ... |
| 2263079 | 3/20 | 9:06 | R10 | R0001 | ... |
| 2263080 | 3/20 | 9:07 | R10 | R0001 | ... |
| | | | | | |

FIG. 28

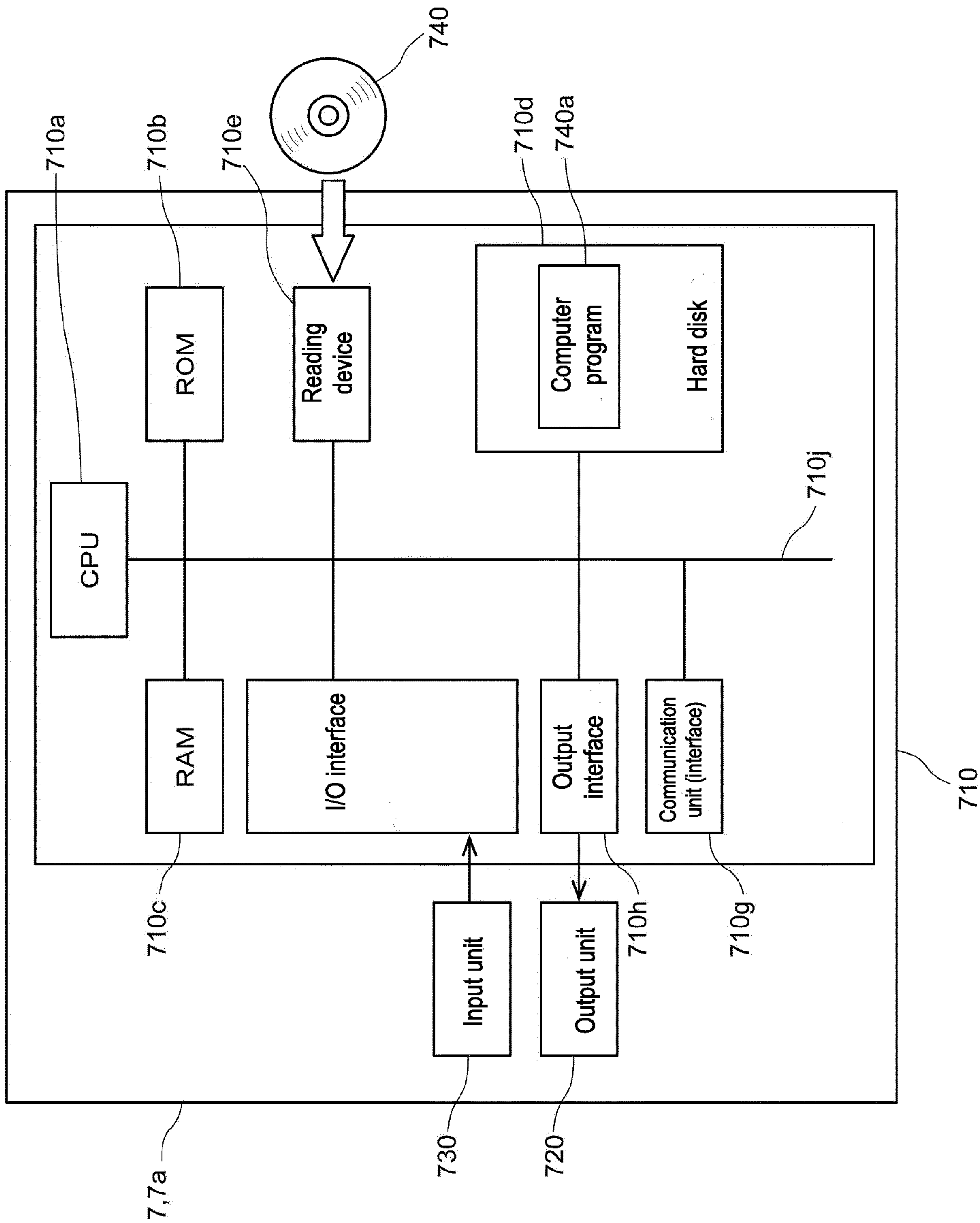
740
710a
710b
710e
710d
740a
ROM
Reading device
Computer program
Hard disk
CPU
710j
RAM
I/O interface
Output interface
Communication unit (interface)
710
710c
710h
710g
Input unit
Output unit
730
720
7,7a

FIG. 29

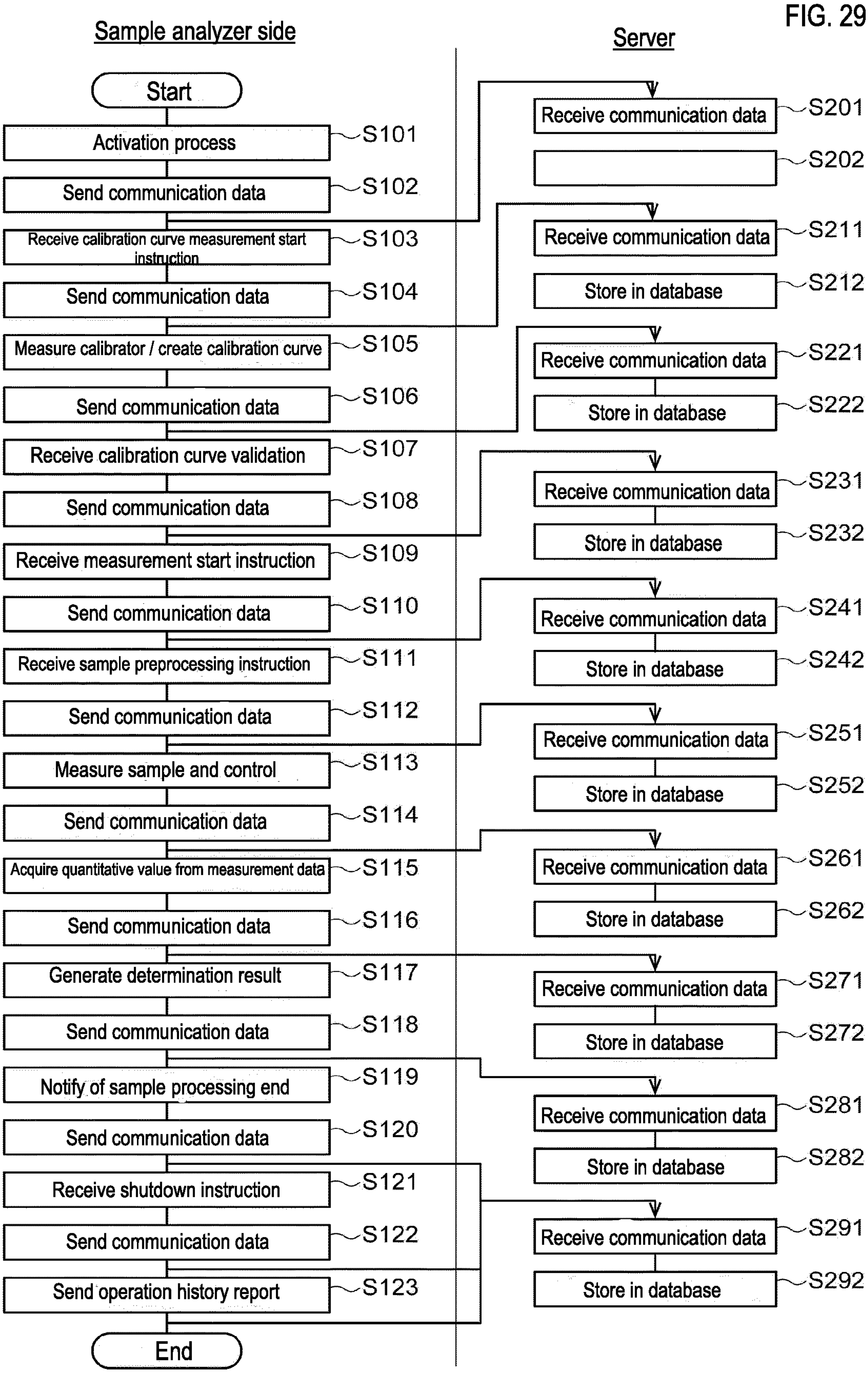
Sample analyzer side
Server
Start
Activation process
S101
Send communication data
S102
Receive calibration curve measurement start instruction
S103
Send communication data
S104
Measure calibrator / create calibration curve
S105
Send communication data
S106
Receive calibration curve validation
S107
Send communication data
S108
Receive measurement start instruction
S109
Send communication data
S110
Receive sample preprocessing instruction
S111
Send communication data
S112
Measure sample and control
S113
Send communication data
S114
Acquire quantitative value from measurement data
S115
Send communication data
S116
Generate determination result
S117
Send communication data
S118
Notify of sample processing end
S119
Send communication data
S120
Receive shutdown instruction
S121
Send communication data
S122
Send operation history report
S123
End
Receive communication data
S201
S202
Receive communication data
S211
Store in database
S212
Receive communication data
S221
Store in database
S222
Receive communication data
S231
Store in database
S232
Receive communication data
S241
Store in database
S242
Receive communication data
S251
Store in database
S252
Receive communication data
S261
Store in database
S262
Receive communication data
S271
Store in database
S272
Receive communication data
S281
Store in database
S282
Receive communication data
S291
Store in database
S292

FIG. 30

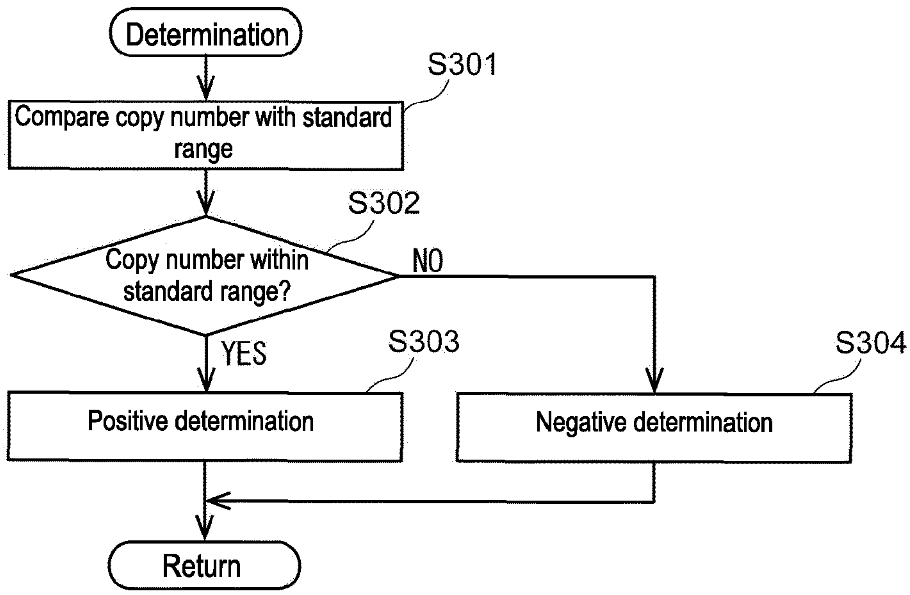
Determination
S301
Compare copy number with standard range
S302
Copy number within standard range?
NO
YES
S303
S304
Positive determination
Negative determination
Return

FIG. 31

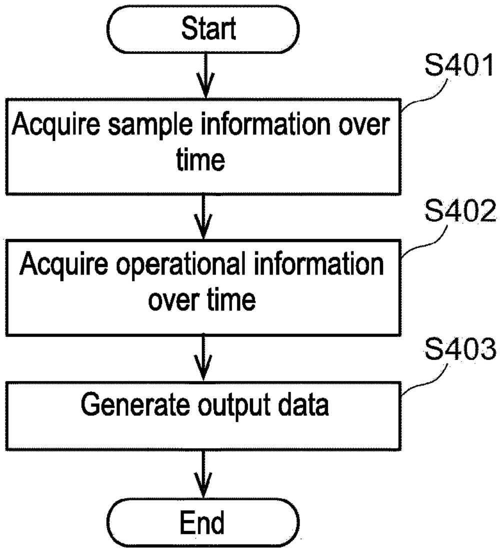
Start
S401
Acquire sample information over time
S402
Acquire operational information over time
S403
Generate output data
End

| Target lot | Start | End | Facility number | Total lymph node number | Negative number (-) | Positive number (+) | Positive number (++) | Positive rate | Determination |
|---|---|---|---|---|---|---|---|---|---|
| ZS6013 | 2017/02/01 | 2017/12/20 | 37 | 2578 | 2237 | 185 | 156 | 13. 2% | ○ |
| ZS7001 | 2017/04/04 | 2018/02/20 | 39 | 3442 | 3026 | 193 | 223 | 12. 1% | ○ |
| ZS7002 | 2017/09/06 | 2018/02/26 | 24 | 769 | 668 | 36 | 65 | 13. 1% | ○ |
| ZS7003 | 2017/10/16 | 2018/02/08 | 13 | 527 | 461 | 35 | 31 | 12. 5% | ○ |
| ZS7004 | 2017/11/10 | 2018/02/23 | 6 | 397 | 353 | 19 | 25 | 11. 1% | ○ |
| ZS7006 | 2017/10/26 | 2018/02/22 | 14 | 488 | 423 | 25 | 40 | 13. 3% | ○ |
| ZS7007 | 2017/12/01 | 2018/02/26 | 8 | 349 | 318 | 16 | 15 | 8. 9% | × |
| ZS7008 | 2017/12/15 | 2018/02/26 | 15 | 362 | 310 | 21 | 31 | 14. 4% | ○ |
| ZS7009 | 2017/12/25 | 2018/02/26 | 15 | 453 | 388 | 23 | 42 | 14. 3% | ○ |
| ZS9999 | 2017/06/22 | 2017/06/22 | 1 | 4 | 2 | 1 | 1 | 50. 0% | 300 or less |

FIG. 32

Europäisches Patentamt
European Patent Office
Office européen des brevets

# EUROPEAN SEARCH REPORT

Application Number
EP 19 16 4291

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/152820 A1 (HEYDLAUF MICHAEL W [US]) 5 June 2014 (2014-06-05)<br>* paragraph [0002] *<br>* paragraph [0011] *<br>* paragraph [0049] *<br>* paragraph [0059] *<br>* paragraph [0063] *<br>* paragraph [0100] *<br>* paragraph [0101] *<br>* paragraph [0105] *<br>* paragraph [0109] *<br>* claim 5 *<br>* figure 1 *<br>* figure 3 *<br>* figure 11 *<br>* figures 12A,12B *<br>* figure 14 *<br>* figure 15D *<br>----- | 1-15 | INV.<br>G01N35/00 |
| A | US 2002/128801 A1 (OKUNO KEN ICHI [JP] ET AL) 12 September 2002 (2002-09-12)<br>* paragraph [0076] *<br>* paragraph [0082] *<br>* figures 8,15,16 *<br>----- | 1-15 | TECHNICAL FIELDS SEARCHED (IPC)<br>G01N |
| A | US 2013/316461 A1 (FUJITA KYOZO [JP]) 28 November 2013 (2013-11-28)<br>* paragraph [0102] *<br>* paragraph [0108] *<br>* figures 14,15 *<br>----- | 1-15 | |
| A | US 2015/377771 A1 (ORIHASHI TOSHIHIDE [JP] ET AL) 31 December 2015 (2015-12-31)<br>* paragraph [0041] *<br>* figure 5 *<br>----- | 1-15 | |

The present search report has been drawn up for all claims

1

| Place of search | Date of completion of the search | Examiner |
|---|---|---|
| The Hague | 16 August 2019 | Traversa, Marzia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 19 16 4291

This annex lists the patent family members relating to the patent documents cited in the above-mentioned European search report. The members are as contained in the European Patent Office EDP file on
The European Patent Office is in no way liable for these particulars which are merely given for the purpose of information.

16-08-2019

| Patent document cited in search report | Publication date | Patent family member(s) | Publication date |
|---|---|---|---|
| US 2014152820 A1 | 05-06-2014 | AU 2008343568 A1 | 09-07-2009 |
| | | CN 101910842 A | 08-12-2010 |
| | | JP 5496912 B2 | 21-05-2014 |
| | | JP 2011508881 A | 17-03-2011 |
| | | US 2010271479 A1 | 28-10-2010 |
| | | US 2014152820 A1 | 05-06-2014 |
| | | WO 2009085534 A1 | 09-07-2009 |
| US 2002128801 A1 | 12-09-2002 | EP 1107159 A2 | 13-06-2001 |
| | | EP 1965326 A2 | 03-09-2008 |
| | | US 2002128801 A1 | 12-09-2002 |
| | | US 2004019460 A1 | 29-01-2004 |
| | | US 2005177345 A1 | 11-08-2005 |
| | | US 2008046208 A1 | 21-02-2008 |
| | | US 2008046503 A1 | 21-02-2008 |
| | | US 2010057873 A1 | 04-03-2010 |
| | | US 2010127885 A1 | 27-05-2010 |
| US 2013316461 A1 | 28-11-2013 | CN 103364572 A | 23-10-2013 |
| | | JP 2013210265 A | 10-10-2013 |
| | | US 2013316461 A1 | 28-11-2013 |
| US 2015377771 A1 | 31-12-2015 | CN 102124347 A | 13-07-2011 |
| | | CN 104215785 A | 17-12-2014 |
| | | CN 104237542 A | 24-12-2014 |
| | | EP 2333556 A1 | 15-06-2011 |
| | | JP 5337806 B2 | 06-11-2013 |
| | | JP 5690886 B2 | 25-03-2015 |
| | | JP 5899339 B2 | 06-04-2016 |
| | | JP 6097856 B2 | 15-03-2017 |
| | | JP 2013238618 A | 28-11-2013 |
| | | JP 2015099160 A | 28-05-2015 |
| | | JP 2016085233 A | 19-05-2016 |
| | | JP WO2010027037 A1 | 02-02-2012 |
| | | US 2011169836 A1 | 14-07-2011 |
| | | US 2015377771 A1 | 31-12-2015 |
| | | WO 2010027037 A1 | 11-03-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4290490 B
- JP 2005098960 A